# FASCICULE DE BREVET EUROPEEN

(11) **EP 3 398 220 B1**
(45) Date de publication et mention de la délivrance du brevet: **22.09.2021**
(21) Numéro de dépôt: 16826131.1
(22) Date de dépôt: 21.12.2016
(51) Int. Cl.: H01M 4/04, H01M 10/0562, H01M 10/0525, H01M 4/139

(54) **BATTERIE ENTIEREMENT SOLIDE COMPRENANT UN ELECTROLYTE SOLIDE ET UNE COUCHE DE MATERIAU CONDUCTEUR IONIQUE**
FESTKÖRPERBATTERIE MIT EINEM FESTELEKTROLYT UND EINER SCHICHT AUS EINEM IONENLEITENDEN MATERIAL
ALL-SOLID-STATE BATTERY INCLUDING A SOLID ELECTROLYTE AND A LAYER OF ION-CONDUCTING MATERIAL

(30) Priorité: 31.12.2015 FR 1502748
(43) Date de publication de la demande: 07.11.2018
(73) Titulaire: I-TEN, 69570 Dardilly (FR)
(72) Inventeur: GABEN, Fabien, 69570 Dardilly (FR); WEISS, Cédric, 69410 Champagne au Mont d'Or (FR); SORRIANO, Claire, 69130 Ecully (FR)
(74) Mandataire: Schmidt, Martin Peter
(86) Numéro de dépôt international: PCT/FR2016/053600
(87) Numéro de publication internationale: WO 2017/115032

(56) Documents cités:
- WO-A1-2014/102520
- FR-A1- 3 002 695
- JP-A- 2008 171 588

## Description

### Domaine technique

La présente invention se rapporte au domaine des batteries et notamment des batteries à ions de lithium. Elle concerne plus particulièrement les batteries à ions de lithium (« batteries Li-ion ») entièrement solides, et un nouveau procédé de fabrication de telles batteries.

### Etat de la technique

On connait plusieurs modes de fabrication des batteries à ions de lithium (« batteries Li-ion »). Les électrodes des batteries Li-ion peuvent être fabriquées à l'aide de techniques d'impression ou de dépôt connues de l'homme du métier, notamment le dépôt par l'enduction au rouleau (« roll coating ») ou par racle (« doctor blade »), ou encore le dépôt par coulage en bande (« tape casting »). Ces techniques consistent à enduire une encre contenant des particules de taille micrométrique de matériaux actifs sur des collecteurs de courant métalliques pour déposer des couches d'une épaisseur typiquement comprise entre 50 et 400 µm. En fonction de l'épaisseur de l'électrode, de sa porosité et de la taille des particules des matériaux actifs, la puissance et l'énergie de la batterie peuvent être modulées.

Ces batteries présentent la particularité de contenir des électrolytes liquides ou sous forme de polymères gélifiés afin d'assurer le transport des ions lithium entre les différentes particules actives des électrodes. Ces électrolytes sont constitués de solvants aprotiques dans lesquels sont dissous des sels de lithium. Cependant, ces électrolytes tendent à se dégrader sous l'effet de potentiels électriques et/ou de températures trop élevées. Cette dégradation peut être violente et rapide en cas de court-circuit interne, et favoriser un emballement thermique de toute la cellule batterie.

En dehors des problèmes de sureté de fonctionnement et de durabilité inhérentes à l'utilisation d'électrolytes à base de solvants aprotiques, ces architectures ne permettent pas non plus d'optimiser les performances électrochimiques de la cellule. La porosité nécessaire au mouillage des électrodes induit une perte de densités d'énergie volumique et massique des électrodes.

La réalisation de batteries Li-ion entièrement solides, sans électrolytes liquides à base de solvants aprotiques, permettrait d'accroitre considérablement les performances des batteries Li-ion. Pour atteindre une haute densité d'énergie volumique, il faudrait disposer d'électrodes de batteries sous la forme de couches minces compactes, dans lesquelles les ions lithium peuvent facilement diffuser, sans avoir à ajouter d'électrolytes conducteurs des ions lithium ni de particules conducteurs de l'électricité dans les électrodes.

De telles électrodes et batteries entièrement solides peuvent être déposées à l'aide de techniques de dépôt sous vide, tels que PVD et/ou CVD. On obtient ainsi des électrodes de batteries totalement solides, sans porosité et ne contenant ni liant, ni électrolyte organique, ni conducteurs électroniques dans les électrodes. Ces techniques permettent également de déposer des couches d'électrolyte sur les électrodes. Ces dépôts sont conformaux, suivent parfaitement la rugosité de surface, sont très adhérent et ne nécessitent pas de traitement thermique à haute température. Les techniques de dépôt sous vide permettent ainsi de garantir une définition précise de l'interface entre l'électrode et l'électrolyte, sans inter-diffusion de l'une des couches dans l'autre, ni risque de mauvais contact mécanique ponctuel entre les deux couches. On obtient ainsi des interfaces de qualité, peu résistives, bien adaptées à la réalisation de batteries entièrement solides, dotées de fortes densités de puissance.

Cependant, ces techniques de dépôt sous vide sont couteuses à mettre en oeuvre et ne permettent pas d'accéder à des compositions chimiques complexes, avec plus de deux ou trois éléments chimiques distincts. De plus les épaisseurs accessibles avec ces techniques restent limitées et ne dépassent que très rarement les 5 µm.

Plus récemment on a déposé des couches minces par électrophorèse de nanoparticules. Cette technique est plus aisée à mettre en oeuvre que les techniques de dépôt sous vide, elle permet en outre de réaliser des électrodes avec des formulations chimiques plus complexes, voir des électrodes composées de deux phases distinctes. Les couches de nanoparticules ainsi déposées peuvent être consolidées par un simple séchage ou par des traitements thermiques à relativement basses températures. Cela limite l'inter-diffusion aux interfaces, un phénomène indésirable qui peut donner naissance à de nouveaux composés chimiques, dont les propriétés de conductivité ioniques et/ou électroniques peuvent être très différents de celles du composant d'origine. Ainsi on obtient des couches d'électrodes et d'électrolyte entièrement solides, denses et fonctionnelles.

Les techniques utilisant des encres ne permettent pas de faire le dépôt en couches très minces. Et si l'on voulait utiliser ces techniques pour faire des électrodes entièrement solides, il faudrait effectuer un recuit de déliantage pour bruler les produits organiques ayant servis à réaliser les encres, et il faudrait consolider les couches. La consolidation se fait typiquement par un traitement thermique à haute température, appelé frittage. Le frittage conduit au retreint, cela ne permet pas de travailler directement sur des substrats métalliques sans risque de fissuration. De plus, à cause de la température élevée le frittage favorise l'inter-diffusion aux différentes interfaces, avec les inconvénients décrits ci-dessus.

Pour réduire les porosités entre les particules sans recourir au frittage à haute température on utilise des conducteurs ioniques solides et relativement fusibles pour lier les particules d'électrodes et d'électrolyte entre elles ou pour lier les particules d'électrolyte entre elles. Cela permet aussi d'améliorer l'intégrité de la couche d'encapsulation de la batterie finale.

La qualité de l'encapsulation est d'une importance capitale pour les batteries de type Li-ion. En effet, afin de garantir leur durée de vie calendaire, les batteries Li-ion doivent être parfaitement encapsulées et protégées de l'environnement externe. Les techniques de déposition par ALD (Atomic layer déposition) sont particulièrement bien adaptées pour recouvrir les surfaces des cellules batteries de manière totalement étanche et conforme. Les couches d'encapsulation ainsi obtenues sont généralement constituées d'oxydes, de type Al₂O₃ ou autre, d'une épaisseur de l'ordre d'une cinquantaine de nanomètres. Ces couches sont par conséquent très fragiles mécaniquement et nécessitent une surface d'appui rigide. Le dépôt d'une couche fragile sur une surface souple conduirait à la formation de fissures, engendrant une perte d'intégrité de cette couche de protection. Par ailleurs, pour permettre industriellement une vitesse de dépôt relativement élevée, ces couches doivent être déposées à une température assez élevée, comprise entre 200 et 300°C. Or, les électrolytes usuels à base de polymères contenant des sels de lithium ne résistent pas à de telles températures et ne présentent pas une surface suffisamment rigide pour garantir la réalisation d'une encapsulation de qualité avec les procédés de dépôt par ALD. Un procédé de fabrication d'une batterie en couche minces entièrement solides est décrit dans le document FR1351810.

Un premier but de la présente invention est de proposer un procédé de fabrication de batteries en couches minces entièrement solides, n'induisant pas l'apparition de phases à l'interface entre les deux couches d'électrolytes à assembler mais également entre les couches d'électrolyte et électrode.

Un autre but de la présente invention est de proposer un procédé de fabrication de batterie, pouvant être constituée d'assemblages multicouches de cellules entièrement solides et performantes, à basse température sans induire de phénomène d'interdiffusion au niveau des interfaces avec les électrodes, ou tout autre transition vitreuse des films d'électrolyte solide induite par des procédés d'assemblages trop chauds.

Un autre but de l'invention est de permettre d'assembler à basse température des films minces d'électrolyte solides de natures différentes afin d'optimiser les choix d'électrolytes sur chacune des électrodes de manière à bénéficier des meilleurs compromis en terme de stabilité chimique des interfaces, de conductivité ionique et d'isolation électrique.

Un autre but de la présente invention est de faciliter l'encapsulation de la batterie.

Un autre but de la présente invention est de garantir la rigidité mécanique nécessaire à la réalisation d'une encapsulation de qualité.

Encore un autre but est d'obtenir au sein de la batterie une résistance interne suffisamment faible, c'est-à-dire une conduction ionique suffisamment élevée dans l'électrolyte pour permettre à la batterie de délivrer une densité de puissance importante.

Un autre but de l'invention est de fabriquer des batteries en couches minces par un procédé pouvant être mis en œuvre industriellement de manière assez simple.

### Objets de l'invention

Un premier objet de l'invention concerne un procédé de fabrication d'une batterie en couches minces entièrement solide comprenant les étapes successives suivantes :
a) on dépose une couche comprenant au moins un matériau d'anode (appelée ici « couche de matériau d'anode ») sur son substrat conducteur, de préférence sélectionné dans le groupe formé par une feuille métallique, une bande métallique, une feuille isolante métallisée, une bande isolante métallisée, un film isolant métallisé, lesdits substrats conducteurs, ou leurs éléments conducteurs, pouvant servir comme collecteur de courant anodique ;
b) on dépose une couche comprenant au moins un matériau de cathode (appelée ici « couche de matériau de cathode ») sur son substrat conducteur, de préférence sélectionné dans le groupe formé par une feuille métallique, une bande métallique, une feuille isolante métallisée, une bande isolante métallisée, un film isolant métallisé, lesdits substrats conducteurs, ou leurs éléments conducteurs, pouvant servir comme collecteur de courant cathodique, étant entendu que les étapes a) et b) peuvent être inversées ;
c) on dépose une couche comprenant au moins un matériau d'électrolyte solide (appelée ici « couche de matériau d'électrolyte ») sur au moins une couche obtenue à l'étape a) et/ou b) ;
d) on dépose une couche d'une solution d'un matériau conducteur ionique, de préférence, au moins un sel de lithium:
   ∘ soit sur la couche de matériau d'anode revêtue d'une couche de matériau d'électrolyte solide et/ou sur la couche de matériau de cathode revêtue ou non d'une couche de matériau d'électrolyte solide ;
   ∘ soit sur la couche de matériau de cathode revêtue d'une couche de matériau d'électrolyte solide et/ou sur la couche de matériau d'anode revêtue ou non d'une couche de matériau d'électrolyte solide ;
e) on sèche la dite couche de la dite solution du matériau conducteur ionique obtenue à l'étape d) afin d'obtenir une couche d'un matériau conducteur ionique; l'épaisseur de la couche dudit matériau conducteur ionique étant inférieure à 10 µm, de préférence inférieure à 5 µm, et encore plus préférentiellement inférieure à 2µm;
f) on empile face sur face successivement une couche de matériau d'anode obtenue à l'étape a), c) ou e) avec une couche de matériau de cathode obtenue à l'étape b), c) ou e), étant entendu que l'empilement comprend au moins une couche de matériau d'électrolyte solide obtenue à l'étape c) et au moins une couche d'un matériau conducteur ionique obtenue à l'étape e) ;
g) on effectue un traitement thermique et/ou une compression mécanique de l'empilement obtenu à l'étape e) pour obtenir une batterie en couches minces entièrement solide, sachant que l'épaisseur de chacune des couches minces présentes au sein de la batterie est inférieure à 10 µm et préférentiellement à 5µm.

Avantageusement, un traitement thermique de recristallisation ou une consolidation de la couche d'anode et/ou de cathode et/ou d'électrolyte est effectué à une température comprise entre 300°C et 1000°C, de préférence entre 400°C et 800°C, et encore plus préférentiellement entre 500°C et 700°C. Avantageusement, le traitement thermique de recristallisation de la couche d'anode et/ou de cathode et/ou d'électrolyte est effectué après l'étape a) et/ou b) de dépôt de la couche d'anode et/ou de cathode, et/ou après l'étape c) de dépôt de la couche d'électrolyte.

Avantageusement, après l'étape a) et/ou b) de dépôt de la couche d'anode et/ou de cathode, et/ou après l'étape c) de dépôt de la couche d'électrolyte, un traitement thermique de recristallisation de la couche respectivement d'anode et/ou de cathode et/ou d'électrolyte est effectué, de préférence à une température comprise entre 300°C et 1000°C, plus préférentiellement entre 400°C et 800°C, et encore plus préférentiellement entre 500°C et 700°C.

De préférence, le matériau conducteur ionique employé à l'étape d) est choisi parmi :
a. les silicates, de préférence choisis parmi Li₂Si₂O₅, Li₂SiO₃, Li₂Si₂O₆, LiAlSiO₄, Li₄SiO₄, LiAlSi₂O₆
b. les composés vitrocéramiques choisis parmi les mélanges Li₃BO₃-Li₂SO₄, Li₃BO₃-Li₂SiO₄, Li₃BO₃-Li₂SO₄Li₂SiO₄,
c. les conducteurs ioniques des ions lithium choisis parmi : LiCI, LiBr, Lil, LiF, LiBH4, LiH, LiOH, LiBO₂, LiPO₃, LiNO₃, Li₃N, Li₂SO₄, LiVO₃, Li₂MoO₄, Li₂B₄O₇, ou un mélange de ces composés.
d. les électrolytes solides de type anti-perovskite choisis parmi : Li₃OA avec A un halogénure ou un mélange d'halogénures, de préférence au moins un des éléments choisi parmi F, Cl, Br, I ou un mélange de deux ou trois ou quatre de ces éléments ; Li₍₃₋ₓ₎M_{x/2}OA avec 0 < x ≤ 3, M un métal divalent, de préférence au moins un des éléments choisi parmi Mg, Ca, Ba, Sr ou un mélange de deux ou trois ou quatre de ces éléments, A un halogénure ou un mélange d'halogénures, de préférence au moins un des éléments choisi parmi F, Cl, Br, I ou un mélange de deux ou trois ou quatre de ces éléments ; Li₍₃₋ₓ₎N_{x/3}OA avec 0 ≤ x ≤ 3, N un métal trivalent, A un halogénure ou un mélange d'halogénures, de préférence au moins un des éléments choisi parmi F, Cl, Br, I ou un mélange de deux ou trois ou quatre de ces éléments ; ou LiCOX_{z}Y_{(1-z)}, avec X et Y des halogénures et 0 ≤ z ≤ 1.

De préférence, les matériaux conducteurs ioniques des ions lithium sont utilisés sous forme amorphe.

Avantageusement, les matériaux conducteurs ioniques des ions lithium comportent au moins un composé additionnel, choisi de préférence, parmi les sels d'halogénures, et avantageusement choisi parmi les sels KCI, KBr, Kl, KF, NaCl, NaBr, Nal et NaF.

Les couches d'anode, de cathode et d'électrolyte solide sont déposées parmi au moins l'une des techniques suivantes :
(i) dépôt physique par phase vapeur (PVD), et plus particulièrement par évaporation sous vide, par ablation laser, par faisceau d'ions, par pulvérisation cathodique ;
(ii) dépôt chimique par phase vapeur (CVD), et plus particulièrement assisté par plasma (PECVD), assisté par laser (LACVD), ou assisté par aérosol (AA-CVD) ;
(iii) dépôt de couches atomiques (ALD) ;
(iv) électropulvérisation ;
(v) électrophorèse ;
(vi) aérosol déposition ;
(vii) sol-gel ;
(viii)trempage, plus particulièrement par trempage-retrait (dip-coating), trempage-tournette (spin-coating), ou par le procédé Langmuir-Blodgett.

De préférence, les couches d'anode, de cathode et d'électrolyte sont déposées par électropulvérisation, électrophorèse, à partir d'un aérosol, trempage, et sont de préférence, toutes déposées par électrophorèse.

Avantageusement, les couches de matériau d'anode et/ou de cathode comprennent en outre des matériaux conducteurs électroniques, et en particulier de graphite, et/ou des nanoparticules de matériaux conducteurs des ions lithium, du type de ceux utilisés pour réaliser les films d'électrolyte, ou des matériaux polymère comportant des groupements ioniques.

Dans un mode de réalisation particulier, les couches d'anode et/ou de cathode et/ou d'électrolyte sont réalisées par un dépôt de nanoparticules respectivement de matériau d'anode, de cathode ou d'électrolyte parmi l'une au moins des techniques suivantes : électropulvérisation, électrophorèse, aérosol déposition, trempage.

De préférence, les couches de nanoparticules de matériau d'anode, de cathode et d'électrolyte sont toutes déposées par électrophorèse.

Avantageusement, le traitement thermique permettant l'assemblage de la batterie est réalisé à une température comprise entre 50°C et 500°C, de préférence à une température inférieure à 350 °C, et encore plus préférentiellement entre 100°C et 200°C et/ou en ce que la compression mécanique des couches à assembler est réalisée à une pression comprise entre 10 et 100 MPa, de préférence entre 20 et 50 MPa.

La couche de matériau d'anode a) est réalisée à partir d'un matériau choisi parmi :
(i) les oxynitrures d'étain (de formule typique SnOₓN_{y}) ;
(ii) le phosphate de fer lithié (de formule typique LiFePO₄) ;
(iii) les oxynitrures mixtes de silicium et étain (de formule typique SiₐSn_{b}O_{y}N_{z} avec a>0, b>0, a+b≤2, 0<y≤4, 0<z≤3) (appelés aussi SiTON), et en particulier le SiSn_{0,87}O_{1,2}N_{1,72} ; ainsi que les oxynitrures-carbures de formule typique SiₐSn_{b}C_{c}O_{y}N_{z} avec a>0, b>0, a+b≤2, 0<c<10, 0<y<24, 0<z<17; SiₐSn_{b}C_{c}O_{y}N_{z}Xₙ avec Xₙ au moins un des éléments parmi F, Cl, Br, I, S, Se, Te, P, As, Sb, Bi, Ge, Pb et a>0, b>0, a+b>0, a+b≤2, 0<c<10, 0<y<24 et 0<z<17; et SiₐSn_{b}O_{y}N_{z}Xₙ avec Xₙ au moins un des éléments parmi F, Cl, Br, I, S, Se, Te, P, As, Sb, Bi, Ge, Pb et a>0, b>0, a+b≤2, 0<y≤4 et 0<z≤3;
(iv) les nitrures de type SiₓN_{y} (en particulier avec x=3 et y=4), SnₓN_{y} (en particulier avec x=3 et y=4), ZnₓN_{y} (en particulier avec x=3 et y=4), Li₃₋ₓMₓN (avec M = Co, Ni, Cu) ;
(v) les oxydes SnO₂, Li₄Ti₅O₁₂, SnB_{0,6}P_{0,4}O_{2,9} et TiO₂.

La couche de matériau de cathode b) est réalisée à partir d'un matériau de cathode choisi parmi :
(i) les oxydes LiMn₂O₄, LiCoO₂, LiNiO₂, LiMn₁₅Ni_{0,5}O₄, LiMn₁₅Ni_{0,5-x}XₓO₄ (où x est sélectionné parmi Al, Fe, Cr, Co, Rh, Nd, autres terres rares, et où 0 < x < 0,1), LiFeO₂, LiMn_{1/3}Ni_{1/3}CO_{1/3}O₄;
(ii) les phosphates LiFePO₄, LiMnPO₄, LiCoPO₄, LiNiPO₄, Li₃V₂(PO₄)₃ ; les phosphates de formule LiMM'PO₄, avec M et M' (M ≠ M') sélectionnés parmi Fe, Mn, Ni, Co, V ;
(iii) toutes les formes lithiées des chalcogénides suivants : V₂O₅, V₃O₃, TiS₂, les oxysulfures de titane (TiO_{y}S_{z}), les oxysulfures de tungstène (WO_{y}S_{z}), CuS, CuS₂.

Avantageusement, la couche de matériau d'électrolyte c) est réalisée à partir de matériau d'électrolyte choisi parmi :
o les grenats de formule Li_{d}A¹xA²_{y}(TO₄)_{z} où
   ▪ A¹ représente un cation de degré d'oxydation +II, de préférence Ca, Mg, Sr, Ba, Fe, Mn, Zn, Y, Gd ; et où
   ▪ A² représente un cation de degré d'oxydation +III, de préférence Al, Fe, Cr, Ga, Ti, La ; et où
   ▪ (TO₄) représente un anion dans lequel T est un atome de degré d'oxydation +IV, situé au centre d'un tétraèdre formé par les atomes d'oxygène, et dans lequel TO₄ représente avantageusement l'anion silicate ou zirconate, sachant que tout ou partie des éléments T d'un degré d'oxydation +IV peuvent être remplacés par des atomes d'un degré d'oxydation +III ou +V, tels que Al, Fe, As, V, Nb, In, Ta ;
   ▪ sachant que : d est compris entre 2 et 10, préférentiellement entre 3 et 9, et encore plus préférentiellement entre 4 et 8 ; x est de 3 mais peut être compris entre 2,6 et 3,4 (de préférence entre 2,8 et 3,2) ; y est de 2 mais peut être compris entre 1,7 et 2,3 (de préférence entre 1,9 et 2,1) et z est de 3 mais peut être compris entre 2.9 et 3.1;
∘ les grenats, de préférence choisi parmi : le Li₇La₃Zr₂O₁₂; le Li₆La₂BaTa₂O₁₂ ; le Li_{5,5}La₃Nb_{1,75}In_{0.25}O₁₂ ; le Li₅La₃M₂O₁₂ avec M = Nb ou Ta ou un mélange des deux composés ; le Li₇₋ₓBaₓLa₃₋ₓM₂O₁₂ avec 0≤x≤1 et M = Nb ou Ta ou un mélange des deux composés ; le Li₇₋ₓLa₃Zr₂₋ₓMₓO₁₂ avec 0≤x≤2 et M = Al, Ga ou Ta ou un mélange de deux ou trois de ces composés ;
o les phosphates lithiés, de préférence choisi parmi : le Li₃PO₄; le Li₃(Sc₂₋ₓMₓ)(PO₄)₃ avec M=AI ou Y et 0 ≤ x ≤ 1 ; le Li₁₊ₓMₓ(Sc)₂₋ₓ(PO₄)₃ avec M = Al, Y, Ga ou un mélange des trois composés et 0 ≤ x ≤ 0,8 ; le Li₁₊ₓMₓ(Ga_{1-y}Sc_{y})₂₋ₓ(PO₄)₃ avec 0 ≤ x ≤ 0,8 ; 0 ≤ y ≤ 1 et M= Al ou Y ou un mélange des deux composés; le Li₁₊ₓMₓ(Ga)₂₋ₓ(PO₄)₃ avec M = Al, Y ou un mélange des deux composés et 0 ≤ x ≤ 0,8 ; le Li₁₊ₓAlₓTi₂₋ₓ(PO₄)₃ avec 0 ≤ x ≤ 1, ou le Li₁₊ₓAlₓGe₂₋ₓ(PO₄)₃ avec 0 ≤ x ≤ 1 ; ou le Li₁₊ₓ+zMₓ(Ge_{1-y}Ti_{y})₂₋ₓSi_{z}P_{3-z}O₁₂ avec 0≤x≤0,8 et 0≤y≤1,0 & 0≤z≤0,6 et M= Al, Ga ou Y ou un mélange de deux ou trois de ces composés ; le Li_{3+y}(Sc₂₋ₓMₓ)Q_{y}P_{3-y}O₁₂, avec M = Al et/ou Y et Q = Si et/ou Se, 0 ≤ x ≤ 0,8 et 0 ≤ y ≤ 1 ; ou le Li_{1+x+y}MₓSc₂₋ₓQ_{y}P_{3-y}O₁₂, avec M = Al, Y, Ga ou un mélange des trois composés et Q = Si et/ou Se, 0 ≤ x ≤ 0,8 et 0 ≤ y ≤ 1 ; ou le Li_{1+x+y+z}Mₓ(Ga_{1-y}Sc_{y})₂₋ₓQ_{z}P_{3-z}O₁₂ avec 0 ≤ x ≤ 0,8 ; 0 ≤ y ≤ 1 ; 0 ≤ z ≤ 0,6 avec M = Al ou Y ou un mélange des deux composés et Q= Si et/ou Se ; ou Li₁₊ₓNₓM₂₋ₓP₃O₁₂, avec 0 ≤ x ≤ 1 et N= Cr et/ou V, M = Sc, Sn, Zr, Hf, Se ou Si, ou un mélange de ces composés ;
∘ les composés soufrés lithiés, de préférence choisi parmi : le LiₓAl_{z-y}Ga_{y}S_{w}(PO₄)_{c} avec 4<w<20, 3<x<10, 0≦y<1, 1≦z<4 et 0<c<20 ; le LiₓAl_{z-y}Ga_{y}S_{w}(BO₃)_{c} avec 4<w<20, 3<x<10, 0≦y<1, 1≦z<4 et 0<c<20; le LiₓAl_{z-y}Sc_{y}S_{w}(PO₄)_{c} avec 4<w<20, 3<x<10, 0≦y<1, 1≦z<4 et 0<c<20 ; le LiₓAl_{z-y}Sc_{y}S_{w}(BO₃)_{c} avec 4<w<20, 3<x<10, 0≦y<1, 1≦z<4 et 0<c<20 ; le LiₓGe_{z-y}Si_{y}S_{w}(PO₄)_{c} avec 4<w<20, 3<x<10, 0≦y<1, 1≦z<4 et 0<c<20 ; le LiₓG_{e(z-y)}Si_{y}S_{w}(BO₃)_{c} avec 4<w<20, 3<x<10, 0≦y<1, 1≦z<4 et 0<c<20 ;
o les borates lithiés, de préférence choisi parmi : le Li₃(SC₂₋ₓMₓ)(BO₃)₃ avec M=AI ou Y et 0 ≤ x ≤ 1 ; le Li₁₊ₓMₓ(Sc)₂₋ₓ(BO₃)₃ avec M = Al, Y, Ga ou un mélange des trois composés et 0 ≤ x ≤ 0,8 ; 0 ≤ y ≤ 1 ; le Li₁₊ₓMₓ(Ga_{1-y}SC_{y})₂₋ₓ(BO₃)₃ avec 0 ≤ x ≤ 0,8 ; 0 ≤ y ≤ 1 et M= Al ou Y ; le Li₁₊ₓMₓ(Ga)₂₋ₓ(BO₃)₃ avec M = Al, Y ou un mélange des deux composés et 0 ≤ x ≤ 0,8 ; 0 ≤ y ≤ 1 ; le Li₃BO₃, le Li₃BO₃-Li₂SO₄, le Li₃BO₃-Li₂SiO₄, le Li₃BO₃-Li₂SiO₄-Li₂SO₄ ;
∘ les oxynitrures, de préférence choisis parmi Li₃PO₄₋ₓN_{2x/3}, Li₄SiO₄₋ₓN_{2x/3}, Li₄GeO₄₋ₓN_{2x/3} avec 0 < x < 4 ou Li₃BO₃₋ₓN_{2x/3} avec 0 < x < 3 ; les matériaux à base d'oxynitrures de lithium de phosphore ou de bore (appelés LiPON et LIBON) pouvant également contenir du silicium, du soufre, du zirconium, de l'aluminium, ou une combinaison d'aluminium, bore, soufre et/ou silicium, et du bore pour les de lithium de phosphore ;
∘ les oxydes lithiés, de préférence choisis parmi le Li₇La₃Zr₂O₁₂ ou le Li₅₊ₓLa₃(Zrₓ,A₂₋ₓ)O₁₂ avec A=Sc, Y, Al, Ga et 1,4 ≤ x ≤ 2 ou le Li_{0,35}La_{0,55}TiO₃ ;
∘ les silicates, de préférence choisis parmi Li₂Si₂O₅, Li₂SiO₃, Li₂Si₂O₆, LiAlSiO₄, Li₄SiO₄, LiAlSi₂O₆ ;
∘ les électrolytes solides de type anti-perovskite choisis parmi : Li₃OA avec A un halogénure ou un mélange d'halogénures, de préférence au moins un des éléments choisi parmi F, Cl, Br, l ou un mélange de deux ou trois ou quatre de ces éléments ; Li₍₃₋ₓ₎M_{x/2}OA avec 0 < x ≤ 3, M un métal divalent, de préférence au moins un des éléments choisi parmi Mg, Ca, Ba, Sr ou un mélange de deux ou trois ou quatre de ces éléments, A un halogénure ou un mélange d'halogénures, de préférence au moins un des éléments choisi parmi F, Cl, Br, I ou un mélange de deux ou trois ou quatre de ces éléments ; Li₍₃₋ₓ₎N_{x/3}OA avec 0 ≤ x ≤ 3, N un métal trivalent, A un halogénure ou un mélange d'halogénures, de préférence au moins un des éléments choisi parmi F, Cl, Br, l ou un mélange de deux ou trois ou quatre de ces éléments ; ou LiCOX_{z}Y_{(1-z)}, avec X et Y des halogénures et 0 ≤ z ≤ 1.

Dans un mode de réalisation particulier, le procédé comprend en outre une étape h) d'encapsulation de la batterie obtenue à l'étape g) par dépôt d'au moins une couche d'encapsulation de matériau céramique, vitreux ou vitrocéramique.

De préférence, la taille des nanoparticules de matériaux d'électrolyte est inférieure à 100 nm, de préférence inférieure à 30 nm.

De préférence, les substrats conducteurs sont en aluminium, en cuivre, en acier inoxydable, en titane ou en nickel, de préférence en nickel, et éventuellement revêtus d'un métal noble choisi parmi les métaux suivants : l'or, le platine, le palladium, le vanadium, le cobalt, le nickel, le manganèse, de niobium, le tantale, le chrome, le molybdène, le titane, le palladium, le zirconium, le tungstène ou tout alliage comprenant au moins un de ces métaux.

Un autre objet de l'invention concerne une batterie susceptible d'être obtenue par le procédé selon l'invention.

Avantageusement, la capacité surfacique de la cathode est supérieure ou égale à la capacité surfacique de l'anode.

Dans un mode de réalisation préféré, l'empilement des couches de cathode et d'anode est décalé latéralement.

Avantageusement, la batterie comprend au moins une couche d'encapsulation, de préférence une couche en oxyde céramique, en verre ou en vitrocéramique.

Encore plus avantageusement, la batterie comprend une deuxième couche d'encapsulation organique déposée sur ladite première couche d'encapsulation, ladite deuxième couche d'encapsulation étant de préférence en silicone ou parylène.

De préférence, ladite au moins une couche d'encapsulation revêt totalement quatre des six faces de ladite batterie et partiellement les deux faces restantes, située sous les métallisations servant à la connectique de la batterie.

Dans un mode de réalisation particulier, la batterie comprend des terminaisons au niveau où les collecteurs de courant cathodique, respectivement anodique, sont apparents.

Avantageusement, les connexions anodiques et les connexions cathodiques se trouvent sur les côtés opposés de l'empilement.

### Description détaillée de l'invention

Dans le cadre de la présente invention, on entend par « dépôt électrophorétique » ou « dépôt par électrophorèse » une couche déposée par un procédé de dépôt de particules préalablement mises en suspension dans un milieu liquide, sur un substrat de préférence conducteur, le déplacement des particules vers la surface du substrat étant généré par l'application d'un champ électrique entre deux électrodes placées dans la suspension, l'une des électrodes constituant le substrat conducteur sur lequel le dépôt est effectué, l'autre électrode (« contre-électrode ») étant posée dans la phase liquide. Un dépôt dit « dense » de particules se forme sur le substrat, si le potentiel zêta de la suspension des particules présente une valeur appropriée, et/ou suite à un traitement spécifique de densification de nature thermique et/ou mécanique. Ce dépôt présente une structure particulière et reconnaissable par l'homme du métier qui le distingue des dépôts obtenus par toute autre technique.

Dans le cadre du présent document, la taille d'une particule est sa plus grande dimension. Ainsi, une « nanoparticule » est une particule dont au moins une des dimensions est inférieure à 100 nm. La « taille de particules » ou « taille moyenne de particules » d'une poudre ou d'un ensemble des particules est donnée en D₅₀.

On entend ici par batterie « tout solide » (appelée aussi ici batterie « entièrement solide »), une batterie comprenant une couche mince entièrement solide d'anode, une couche mince entièrement solide d'électrolyte et une couche mince entièrement solide de cathode, i.e. des couches possédant une grande précision géométrique, notamment une épaisseur contrôlée avec précision, et un très faible nombre de défauts. Dans le cadre de la présente invention l'épaisseur de chacune des couches minces présentes au sein de la batterie, après densification, est inférieure à 10 µm et préférentiellement inférieure à 5 µm. L'épaisseur de la couche d'électrolyte après densification est avantageusement inférieure à 5 µm, préférentiellement inférieure à 2 µm et encore plus préférentiellement inférieure à 1 µm. La porosité de chacune des couches minces présentes au sein de la batterie, après densification, est inférieure à 15%, préférentiellement inférieure à 10% et encore plus préférentiellement inférieure à 5%. La batterie, résultant de l'assemblage de ces couches minces entièrement solides, présente à la fois une densité de puissance accrue et une meilleure densité d'énergie. Ces batteries présentent aussi une durée de vie améliorée pouvant résister à des expositions en températures élevées sans se détériorer.

Ces batteries, une fois fabriquées, ne comprennent pas de matériau en phase liquide.

On entend par « sel de lithium » tout composé qui se dissocie sous forme ionique dans un solvant approprié.On entend par « capacité surfacique » d'une électrode la quantité d'ion lithium susceptible d'être insérée dans une électrode (exprimée en µAh/cm²).

Pour répondre aux inconvénients précédemment cités, l'inventeur a mis au point un nouveau procédé de fabrication de batterie tout solide, constituée d'assemblages multicouches de cellules entièrement solides et performantes, et ce, à basse température. Les objectifs sont atteints par la mise en oeuvre d'un procédé de fabrication d'une batterie en couche mince comprenant au moins une couche d'un matériau conducteur ionique. Afin d'obtenir des batteries possédant une bonne densité d'énergie et de puissance, les batteries obtenues par le procédé selon l'invention sont de structure multicouches, contrairement aux structures planaires des batteries en couches minces conventionnelles.

Lors de la fabrication de la batterie, avantageusement, les couches d'anode et/ou de cathode et/ou d'électrolyte subissent un traitement thermique de recristallisation ou une consolidation permettant de densifier les couches. Ce traitement thermique de recristallisation de la couche est effectué à une température comprise entre 300°C et 1000°C, de préférence entre 400°C et 800°C, et encore plus préférentiellement entre 500°C et 700°C. Avantageusement, le traitement thermique de recristallisation de la couche d'anode et/ou de cathode et/ou d'électrolyte est effectué après l'étape a) et/ou b) de dépôt de la couche d'anode et/ou de cathode, et/ou après l'étape c) de dépôt de la couche d'électrolyte.

Concernant ces consolidations, idéalement chacune des électrodes (anode et cathode) est consolidée séparément avant le dépôt d'une couche comprenant au moins un matériau d'électrolyte solide. Une fois le dépôt de cette couche d'électrolyte solide réalisé sur au moins une des électrodes (anode ou cathode) et séché, soit on consolide, ie recristallise ce dépôt d'électrolyte avant l'application d'un matériau conducteur ionique, de préférence au moins un sel de lithium, qui servira ensuite à faire l'assemblage à basse température, soit on dépose le matériau conducteur ionique, de préférence au moins un sel de lithium, sur cette couche séchée, sur laquelle des porosités peuvent rester présentes, alors dans ce cas le matériau conducteur ionique servira à l'assemblage et au frittage en solution (consolidation) des particules d'électrolyte solide.

De plus, après fabrication et dépôt d'au moins une couche d'un matériau conducteur ionique, ces batteries sont assemblées à une température relativement basse, i.e. à une température inférieure à 500°C, de préférence inférieure à 350°C et ce sans diminuer les capacités surfaciques des électrodes constitutives de la batterie résultante. La réalisation d'une batterie "tout solide" nécessite le recours à des matériaux stables dimensionnellement, afin de fiabiliser le comportement de la batterie, notamment en ce qui concerne la limitation des contraintes de déformation sur l'encapsulation ou sur les électrodes.

Les couches d'anode, de cathode et d'électrolyte solide sont déposées parmi au moins l'une des techniques suivantes, connues en tant que telles :
- Le dépôt physique par phase vapeur (PVD), et plus particulièrement par évaporation sous vide, par ablation laser, par faisceau d'ions, par pulvérisation cathodique ;
- Le dépôt chimique par phase vapeur (CVD), et plus particulièrement assisté par plasma (PECVD), assisté par laser (LACVD), ou assisté par aérosol (AA-CVD) ;
- Le dépôt de couches atomiques (ALD) ;
- L'électropulvérisation ;
- L'électrophorèse ;
- Le dépôt par aérosol ;
- La technique sol-gel ;
- Le trempage, plus particulièrement le trempage-retrait (dip-coating), le trempage-tournette (spin-coating), ou le procédé Langmuir-Blodgett.

Selon l'invention, les couches d'anode, de cathode et d'électrolyte solide sont avantageusement déposées par électrophorèse. Le dépôt électrophorétique de particules se fait par l'application d'un champ électrique entre le substrat sur lequel est réalisé le dépôt et une contre-électrode, permettant de mettre en mouvement les particules chargées de la suspension colloïdale, et de les déposer sur le substrat. L'absence de liants et d'autres solvants déposés en surface avec les particules permet d'obtenir des dépôts très compacts. La compacité obtenue grâce au dépôt électrophorétique limite largement le risque de craquelures ou d'apparition d'autres défauts dans le dépôt pendant les étapes de séchage. De plus la vitesse de dépôt peut être très élevée en fonction du champ électrique appliqué et de la mobilité électrophorétique des particules en suspension.

Selon l'invention, le procédé de fabrication d'une batterie tout solide selon l'invention comprend une étape a) de dépôt d'une couche de matériaux d'anode, qui sont de préférence choisis parmi :
(i) les oxynitrures d'étain (de formule typique SnOₓN_{y}) ;
(ii) le phosphate de fer lithié (de formule typique LiFePO₄) ;
(iii) les oxynitrures mixtes de silicium et étain (de formule typique SiₐSn_{b}O_{y}N_{z} avec a>0, b>0, a+b≤2, 0<y≤4, 0<z≤3) (appelés aussi SiTON), et en particulier le SiSn_{0,87}O_{1,2}N_{1,72} ; ainsi que les oxynitrures-carbures de formule typique SiₐSn_{b}C_{c}O_{y}N_{z} avec a>0, b>0, a+b≤2, 0<c-10, 0<y<24, 0<z<17; SiₐSn_{b}C_{c}O_{y}N_{z}Xₙ avec Xₙ au moins un des éléments parmi F, Cl, Br, l, S, Se, Te, P, As, Sb, Bi, Ge, Pb et a>0, b>0, a+b>0, a+b≤2, 0<c<10, 0<y<24 et 0<z<17; et SiₐSn_{b}O_{y}N_{z}Xₙ avec Xₙ au moins un des éléments parmi F, Cl, Br, l, S, Se, Te, P, As, Sb, Bi, Ge, Pb et a>0, b>0, a+b≤2, 0<y≤4 et 0<z≤3.
(iv) les nitrures de type SiₓN_{y} (en particulier avec x=3 et y=4), SnₓN_{y} (en particulier avec x=3 et y=4), ZnₓN_{y} (en particulier avec x=3 et y=4), Li₃₋ₓMₓN (avec M = Co, Ni, Cu) ;
(v) les oxydes SnO₂, Li₄Ti₅O₁₂, SnB_{0,6}P_{0,4}O_{2,9} et TiO₂.

Le Li₄Ti₅O₁₂ est particulièrement préférée ; c'est est un matériau à insertion qui insère les ions de lithium de manière réversible, sans induire de déformation du matériau hôte.

Selon l'invention, le procédé de fabrication d'une batterie tout solide comprend une étape b) de dépôt d'une couche de matériaux de cathode, de préférence par électrophorèse ; ces matériaux sont de préférence choisis parmi :
(i) les oxydes LiMn₂O₄, LiCoO₂, LiNiO₂, LiMn_{1,5}Ni₀,₅O₄, LiMn_{1,5}Ni_{0,5-x}XₓO₄ (où X est sélectionné parmi Al, Fe, Cr, Co, Rh, Nd, autres terres rares, et où 0 < x < 0,1), LiFeO₂, LiMn_{1/3}Ni_{1/3}CO_{1/3}O₄;
(ii) les phosphates LiFePO₄, LiMnPO₄, LiCoPO₄, LiNiPO₄, Li₃V₂(PO₄)₃ ;
(iii) toutes les formes lithiées des chalcogénides suivants : V₂O₅, V₃O₃, TiS₂, les oxysulfures de titane (TiO_{y}S_{z}), les oxysulfures de tungstène (WO_{y}S_{z}), CuS, CuS₂.

L'électrode de cathode, constituée d'un film mince de LiMn₂O₄ déposé sur un substrat métallique, de préférence en nickel, est avantageusement déposée sans avoir recours à des techniques du vide, ni salles sèches, qui sont des équipements très couteux. En effet, le LiMn_{2O4}, comme le LiMn_{1,5}Ni_{0,5}O₄, n'est pas très sensible contre l'air, mais il faut tout de même éviter l'exposition prolongée. En revanche, l'impact d'une exposition des matériaux de cathode à l'air pendant la fabrication des électrodes reste négligeable car la durée de mise en œuvre est relativement courte.

Pour le dépôt de l'anode ou de la cathode, on peut ajouter aux matériaux cités précédemment des nanoparticules de matériaux conducteurs électroniques, et en particulier de graphite, et/ou des nanoparticules de matériaux conducteurs ioniques, du type de ceux utilisés pour réaliser les films d'électrolyte (décrits ci-après), ou des matériaux polymère comportant des groupements ioniques.

Pour des nanoparticules d'une taille inférieure à environ 100 nm, les couches d'anode, de cathode et d'électrolyte peuvent être déposées par électropulvérisation, électrophorèse, à partir d'un aérosol ou par trempage.

Avantageusement, les couches de matériaux d'anode et de cathode sont déposées par électrophorèse à partir d'une suspension de nanoparticules de matériau d'anode et de cathode respectivement. Ces couches sont avantageusement déposées directement sur leur substrat métallique utilisé comme collecteur de courant.

Avantageusement, les couches d'anode, de cathode et d'électrolyte sont toutes déposées par électrophorèse. Ce mode de réalisation particulier du procédé selon l'invention permet d'obtenir des couches denses et compactes de nanoparticules, notamment par auto-densification (appelé « self-sintering ») de la couche de nanoparticules lors de l'étape de dépôt électrophorétique, de séchage et/ou de traitement thermique à basse température. Par ailleurs, les couches de nanoparticules de matériaux d'anode ou de cathode déposées par électrophorèse étant compactes, le risque de fissuration de la couche après séchage est réduit, et ce, contrairement aux couches de nanoparticules réalisées à partir d'encres ou de fluides ayant de faibles extraits secs et pour lesquels les dépôts contiennent du solvant en grande quantité, qui après séchage donne lieu à l'apparition de fissures dans le dépôt, nuisible pour le fonctionnement d'une batterie.

Selon l'invention, la couche de matériaux d'anode ou de cathode est déposée directement sur son substrat conducteur, de préférence un substrat conducteur métallique choisi parmi les matériaux suivants : nickel, aluminium, acier inoxydable, titane ou cuivre. Dans un mode de réalisation préféré, la couche de matériau d'anode ou de cathode est déposée sur un substrat en nickel. De manière générale, on préfère que l'épaisseur du substrat conducteur métallique soit inférieure à 10 µm, de préférence inférieure à 5 µm.

Lesdits substrats conducteurs peuvent être approvisionnés sous forme de feuilles, éventuellement des feuilles comprenant les motifs des électrodes pré-découpés, ou sous forme de bandes. Afin d'améliorer la qualité des contacts électriques avec les électrodes, les substrats peuvent avantageusement être revêtus d'un métal ou d'un alliage de métaux, de préférence choisi parmi l'or, le chrome, l'inox, le palladium, le molybdène, le titane, le tantale, ou l'argent.

Selon l'invention, le dépôt d'une couche de nanoparticules de matériau d'anode ou de cathode directement sur son substrat conducteur, par exemple par électrophorèse, permet d'obtenir une couche dense de structure nanocristalline. Cependant, la formation de joints de grains est possible, conduisant à formation d'une couche de structure particulière, entre celle d'un matériau amorphe et cristallisé, ce qui peut dans certains cas limiter la cinétique de diffusion des ions lithiums dans l'épaisseur de l'électrode. Ainsi, la puissance de l'électrode de la batterie et le cycle de vie peuvent être affectés. Avantageusement, afin d'améliorer les performances de la batterie, on effectue un traitement thermique de recristallisation pour améliorer la cristallinité, et éventuellement la consolidation de l'électrode afin de renforcer la puissance des électrodes (anode et/ou cathode).

Le traitement thermique de recristallisation de la couche d'anode et/ou de cathode est effectué à une température comprise entre 300°C et 1000°C, de préférence entre 400°C et 800°C, et encore plus préférentiellement entre 500°C et 700°C. Il doit intervenir après l'étape a) et/ou b) de dépôt de la couche d'anode et/ou de cathode, et après l'étape c) de dépôt de la couche d'électrolyte.

Selon l'invention, le procédé de fabrication d'une batterie comprend une étape c) de dépôt d'une couche de matériau d'électrolyte. La couche de matériau d'électrolyte est déposée sur la couche de matériau d'anode, et/ou sur la couche de matériau de cathode.

Le dépôt d'une couche d'électrolyte solide sur la couche d'anode et/ou de cathode permet de protéger la cellule électrochimique de court-circuit interne. Il permet également de réaliser une batterie entièrement solide comportant une durée de vie élevée, et simple de fabrication. La couche de matériau d'électrolyte est de préférence déposée par électrophorèse.

Plus particulièrement, les matériaux choisis en tant que matériaux d'électrolyte sont de préférence choisis parmi les matériaux suivants :
- sur la couche de matériau obtenue à l'étape a) et/ou b) :
   o les grenats de formule Li_{d}A¹ₓA²_{y}(TO₄)_{z} où
      ▪ A¹ représente un cation de degré d'oxydation +II, de préférence Ca, Mg, Sr, Ba, Fe, Mn, Zn, Y, Gd ; et où
      ▪ A² représente un cation de degré d'oxydation +III, de préférence Al, Fe, Cr, Ga, Ti, La ; et où
      ▪ (TO₄) représente un anion dans lequel T est un atome de degré d'oxydation +IV, situé au centre d'un tétraèdre formé par les atomes d'oxygène, et dans lequel TO₄ représente avantageusement l'anion silicate ou zirconate, sachant que tout ou partie des éléments T d'un degré d'oxydation +IV peuvent être remplacés par des atomes d'un degré d'oxydation +III ou +V, tels que Al, Fe, As, V, Nb, In,Ta ;
      ▪ sachant que : d est compris entre 2 et 10, préférentiellement entre 3 et 9, et encore plus préférentiellement entre 4 et 8 ; x est de 3 mais peut être compris entre 2,6 et 3,4 (de préférence entre 2,8 et 3,2) ; y est de 2 mais peut être compris entre 1,7 et 2,3 (de préférence entre 1,9 et 2,1) et z est de 3 mais peut être compris entre 2.9 et 3.1;
   o les grenats, de préférence choisi parmi : le Li₇La₃Zr₂O₁₂; le Li₆La₂BaTa₂O₁₂ ; le Li_{5,5}La₃Nb_{1,75}In_{0.25}O₁₂ ; le Li₅La₃M₂O₁₂ avec M = Nb ou Ta ou un mélange des deux composés ; le Li₇₋ₓBaₓLa₃₋ₓM₂O₁₂ avec 0≤x≤1 et M = Nb ou Ta ou un mélange des deux composés ; le Li₇₋ₓLa₃Zr₂₋ₓMₓO₁₂ avec 0≤x≤2 et M = Al, Ga ou Ta ou un mélange de deux ou trois de ces composés ;
   o les phosphates lithiés, de préférence choisi parmi : le Li₃PO₄; le Li₃(Sc₂₋ₓMₓ)(PO₄)₃ avec M=AI ou Y et 0 ≤ x ≤ 1 ; le Li₁₊ₓMₓ(Sc)₂₋ₓ(PO₄)₃ avec M = Al, Y, Ga ou un mélange des trois composés et 0 ≤ x ≤ 0,8 ; le Li₁₊ₓMₓ(Ga_{1-y}Sc_{y})₂₋ₓ(PO₄)₃ avec 0 ≤ x ≤ 0,8 ; 0 ≤ y ≤ 1 et M= Al ou Y ou un mélange des deux composés; le Li₁₊ₓMₓ(Ga)₂₋ₓ(PO₄)₃ avec M = Al, Y ou un mélange des deux composés et 0 ≤ x ≤ 0,8 ; le Li₁₊ₓAlₓTi₂₋ₓ(PO₄)₃ avec 0 ≤ x ≤ 1, ou le Liᵢ₊ₓAlₓGe₂₋ₓ(PO₄)₃ avec 0 ≤ x ≤ 1 ; ou le Li_{1+x+z}Mₓ(Ge_{1-y}Ti_{y})₂₋ₓSi_{z}P_{3-z}O₁₂ avec 0≤x≤0,8 et 0≤y≤1,0 & 0≤z≤0,6 et M= Al, Ga ou Y ou un mélange de deux ou trois de ces composés ; le Li_{3+y}(Sc₂₋ₓMₓ)Q_{y}P_{3-y}O₁₂, avec M = Al et/ou Y et Q = Si et/ou Se, 0 ≤ x ≤ 0,8 et 0 ≤ y ≤ 1 ; ou le Li_{1+x+y}MₓSc₂₋ₓQ_{y}P_{3-y}O₁₂, avec M = Al, Y, Ga ou un mélange des trois composés et Q = Si et/ou Se, 0 ≤ x ≤ 0,8 et 0 ≤ y ≤ 1 ; ou le Li_{1+x+y+z}Mₓ(Ga_{1-y}SC_{y})₂₋ₓQ_{z}P_{3-z}O₁₂ avec 0 ≤ x ≤ 0,8 ; 0 ≤ y≤ 1 ; 0 ≤ z ≤ 0,6 avec M = Al ou Y ou un mélange des deux composés et Q= Si et/ou Se ; ou Li₁₊ₓNₓM₂₋ₓP₃O₁₂, avec 0 ≤ x ≤ 1 et N= Cr et/ou V, M = Sc, Sn, Zr, Hf, Se ou Si, ou un mélange de ces composés ;
   o les composés soufrés lithiés, de préférence choisi parmi : le LiₓAl_{z-y}Ga_{y}S_{w}(PO₄)_{c} avec 4<w<20, 3<x<10, 0≦y<1, 1≦z<4 et 0<c<20 ; le LiₓAl_{z-y}Ga_{y}S_{w}(BO₃)_{c} avec 4<w<20, 3<x<10, 0≦y<1, 1≦z<4 et 0<c<20; le LiₓAl_{z-y}Sc_{y}S_{w}(PO₄)_{d} avec 4<w<20, 3<x<10, 0≦y<1, 1≦z<4 et 0<c<20 ; le LiₓAl_{z-y}Sc_{y}S_{w}(BO₃)_{c} avec 4<w<20, 3<x<10, 0≦y<1, 1≦z<4 et 0<c<20 ; le LiₓGe_{z-y}Si_{y}S_{w}(PO₄)_{c} avec 4<w<20, 3<x<10, 0≦y<1, 1≦z<4 et 0<c<20 ; le LiₓGe_{(z-y)}Si_{y}S_{w}(BO₃)_{c} avec 4<w<20, 3<x<10, 0≦y<1, 1≦z<4 et 0<c<20 ;
   o les borates lithiés, de préférence choisi parmi : le Li₃(Sc₂₋ₓMₓ)(BO₃)₃ avec M=AI ou Y et 0 ≤ x ≤ 1 ; le Li₁₊ₓMₓ(Sc)₂₋ₓ(BO₃)₃ avec M = Al, Y, Ga ou un mélange des trois composés et 0 ≤ x ≤ 0,8 ; 0 ≤ y ≤ 1 ; le Li₁₊ₓMₓ(Ga_{1-y}SC_{y})₂₋ₓ(BO₃)₃ avec 0 ≤ x ≤ 0,8 ; 0 ≤ y ≤ 1 et M= Al ou Y ; le Li₁₊ₓMₓ(Ga)₂₋ₓ(BO₃)₃ avec M = Al, Y ou un mélange des deux composés et 0 ≤ x ≤ 0,8 ; 0 ≤ y ≤ 1 ; le Li₃BO₃, le Li₃BO₃-Li₂SO₄, le Li₃BO₃₋Li₂SiO₄, le Li₃BO₃-Li₂SiO₄-Li₂SO₄ ;
   ∘ les oxynitrures, de préférence choisis parmi Li₃PO₄₋ₓN_{2x/3}, Li₄SiO₄₋ₓN_{2x/3}, Li₄GeO₄₋ₓN_{2x/3} avec 0 < x < 4 ou Li₃BO₃₋ₓN_{2x/3} avec 0 < x < 3 ; les matériaux à base d'oxynitrures de lithium de phosphore ou de bore (appelés LiPON et LIBON) pouvant également contenir du silicium, du soufre, du zirconium, de l'aluminium, ou une combinaison d'aluminium, bore, soufre et/ou silicium, et du bore pour les de lithium de phosphore ;
   o les oxydes lithiés, de préférence choisis parmi le Li₇La₃Zr₂O₁₂ ou le Li₅₊ₓLa₃(Zrₓ,A₂₋ₓ)O₁₂ avec A=Sc, Y, Al, Ga et 1,4 ≤ x ≤ 2 ou le Li_{0,35}La_{0,55}TiO₃ ;
   o les silicates, de préférence choisis parmi Li₂Si₂O₅, Li₂SiO₃, Li₂Si₂O₆, LiAlSiO₄, Li₄SiO₄, LiAlSi₂O₆ ;
   o les électrolytes solides de type anti-perovskite choisis parmi : Li₃OA avec A un halogénure ou un mélange d'halogénures, de préférence au moins un des éléments choisi parmi F, Cl, Br, I ou un mélange de deux ou trois ou quatre de ces éléments ; Li₍₃₋ₓ₎M_{x/2}OA avec 0 < x ≤ 3, M un métal divalent, de préférence au moins un des éléments choisi parmi Mg, Ca, Ba, Sr ou un mélange de deux ou trois ou quatre de ces éléments, A un halogénure ou un mélange d'halogénures, de préférence au moins un des éléments choisi parmi F, Cl, Br, I ou un mélange de deux ou trois ou quatre de ces éléments ; Li₍₃₋ₓ₎N_{x/3}OA avec 0 ≤ x ≤ 3, N un métal trivalent, A un halogénure ou un mélange d'halogénures, de préférence au moins un des éléments choisi parmi F, Cl, Br, I ou un mélange de deux ou trois ou quatre de ces éléments ; ou LiCOX_{z}Y_{(1-z)}, avec X et Y des halogénures et 0 ≤ z ≤ 1 ;

De préférence, lorsqu'on dépose une couche de matériau d'électrolyte uniquement sur la couche obtenue à l'étape b), on dépose une couche de matériau d'électrolyte choisi parmi :
o le Li₃(Sc₂₋ₓMₓ)(PO₄)₃ avec M=AI ou Y et 0 ≤ x ≤1 ; ou
o le Li₁₊ₓMₓ(Sc)₂₋ₓ(PO₄)₃ avec M = Al, Y, Ga ou un mélange de deux ou trois des composés et 0 ≤ x ≤ 0,8 ; 0 ≤ y ≤ 1,0 ; ou
o le Li₁₊ₓMₓ(Ga)₂₋ₓ(PO₄)₃ avec M = Al, Y ou un mélange des deux composés M et 0 ≤ x ≤ 0,8; 0 ≤ y ≤ 1,0 ; ou
o le Li₁₊ₓMₓ(Ga_{1-y}Sc_{y})₂₋ₓ(PO₄)₃ avec 0 ≤ x ≤ 0,8 ; 0 ≤ y ≤ 1,0 et M= Al ou Y, ou un mélange des deux composés ; ou
o le Li₁₊ₓAlₓTi₂₋ₓ(PO₄)₃ avec 0 ≤ x ≤ 1, ou
o le Li₁₊ₓAlₓGe₂₋ₓ(PO₄)₃ avec 0 ≤ x ≤ 1 ; ou
o le Li_{1+x+z}Mₓ(Ge_{1-y}Ti_{y})₂₋ₓSi_{z}P_{3-z}O₁₂ avec 0≤x≤0,8 et 0≤y≤1,0 & 0≤z≤0,6 et M= Al, Ga ou Y ou un mélange de deux ou trois de ces composé ;ou
o Les oxydes lithiés choisis parmi les Li₇La₃Zr₂O₁₂ ou le Li₅₊ₓLa₃(Zrₓ,A₂₋ₓ)O₁₂ avec A=Sc, Y, Al, Ga et 1,4 ≤ x ≤ 2, Li_{0,35}La_{0,55}TiO₃ ou Li_{0,5}La_{0,5}TiO₃;
   o les borates lithiés, de préférence choisi parmi : le Li₃(SC₂₋ₓMₓ)(BO₃)₃ avec M=AI ou Y et 0 ≤ x ≤ 1 ; le Li₁₊ₓMₓ(Sc)₂₋ₓ(BO₃)₃ avec M = Al, Y, Ga ou un mélange des trois composés et 0 ≤ x ≤ 0,8 ; 0 ≤ y ≤ 1 ; le Li₁₊ₓMₓ(Ga_{1-y}SC_{y})₂₋ₓ(BO₃)₃ avec 0 ≤ x ≤ 0,8 ; 0 ≤ y ≤ 1 et M= Al ou Y ; le Li₁₊ₓMₓ(Ga)₂₋ₓ(BO₃)₃ avec M = Al, Y ou un mélange des deux composés et 0 ≤ x ≤ 0,8 ; 0 ≤ y ≤ 1 ; le Li₃BO₃, le Li₃BO₃-Li₂SO₄, le Li₃BO₃-Li₂SiO₄, le Li₃BO₃-Li₂SiO₄-Li₂SO₄ ;
   ∘ les oxynitrures, de préférence choisis parmi Li₃PO₄₋ₓN_{2x/3}, Li₄SiO₄₋ₓN_{2x/3}, Li₄GeO₄₋ₓN_{2x/3} avec 0 < x < 4 ou Li₃BO₃₋ₓN_{2x/3} avec 0 < x < 3 ; les matériaux à base d'oxynitrures de lithium de phosphore ou de bore (appelés LiPON et LIBON) pouvant également contenir du silicium, du soufre, du zirconium, de l'aluminium, ou une combinaison d'aluminium, bore, soufre et/ou silicium, et du bore pour les de lithium de phosphore ;
   o les silicates, de préférence choisis parmi Li₂Si₂O₅, Li₂SiO₃, Li₂Si₂O₆, LiAlSiO₄, Li₄SiO₄, LiAlSi₂O₆.

Avantageusement, la couche d'électrolyte solide est déposée par électrophorèse de nanoparticules de matériau d'électrolyte, isolantes électriquement. Les couches obtenues sont totalement couvrantes, sans défauts localisés. La densité du courant de dépôt se concentre sur les zones les moins isolantes, notamment localisées où un défaut est éventuellement présent. Avantageusement, afin d'améliorer les performances de la batterie, la couche d'électrolyte est ensuite séchée et consolidée par traitement thermique. L'absence de défauts dans la couche d'électrolyte évite l'apparition de court-circuit rampants, d'autodécharge excessive, voire de défaillance de la cellule de la batterie.

La performance des batteries obtenues par le procédé selon l'invention est en partie due à la structure du ou des matériaux de l'électrolyte. Pour obtenir une bonne performance de la batterie, il est avantageux d'obtenir un électrolyte en verre amorphe, ou de structures nanocristallines. Ainsi, pour éviter la croissance des grains des matériaux d'électrolyte après leur dépôt, et pour éviter de créer des réactions aux interfaces, l'assemblage de la batterie ne doit pas être réalisé à une température élevée, i.e. la température ne doit pas dépasser 500°C, et de préférence doit être inférieure à 350°C.

Selon l'invention, on réalise après le dépôt de la couche de matériau d'électrolyte une couche d'un matériau conducteur ionique:
∘ soit sur la couche de matériau d'anode revêtue d'une couche de matériau d'électrolyte solide et/ou sur la couche de matériau de cathode revêtue ou non d'une couche de matériau d'électrolyte solide ;
∘ soit sur la couche de matériau de cathode revêtue d'une couche de matériau d'électrolyte solide et/ou sur la couche de matériau d'anode revêtue ou non d'une couche de matériau d'électrolyte solide.

De préférence le matériau conducteur ionique est choisi parmi des sels minéraux, et peuvent être dissous dans un solvant ; ce solvant permettant de rendre ces matériaux suffisamment fluides pour qu'ils puissent être appliqués. Cette fluidité est nécessaire pour imbiber les porosités du support lorsque ce dernier contient des porosités résiduelles, et/ou pour déposer un film fin de quelques dizaines voire de centaines de nanomètres à la surface du film d'électrolyte solide lorsque ce dernier est consolidé.

Un solvant, permettant de dissoudre le conducteur ionique, peut être employé afin de faciliter son application ; ce solvant étant complétement éliminé lors d'une étape ultérieure de séchage de la couche obtenue après le dépôt de cette solution.

Après séchage, on obtient une couche d'un matériau conducteur ionique. La batterie ainsi obtenue ne comprend donc pas de matériau en phase liquide.

Dans un mode de réalisation du procédé selon l'invention, on dépose directement le matériau conducteur ionique par trempage-retrait (dip-coating), par trempage-tournette (spin-coating), enduction au rouleau (roll coating), racle (doctor blade). Pour cela, on dissout dans un premier temps le matériau conducteur ionique dans un solvant approprié, on dépose le matériau conducteur ionique dissous sur la ou les couche(s) d'anode, de cathode et/ou d'électrolyte puis on sèche la couche de matériau conducteur ionique afin d'éliminer le solvant. Un tel . dépôt d'un matériau conducteur ionique permet d'augmenter considérablement la conductivité ionique de l'électrolyte et d'améliorer l'adhésion entre la couche sur laquelle a été déposée le matériau conducteur ionique et la couche en regard, qui peut être une couche d'anode, de cathode ou d'électrolyte. Cette amélioration est essentiellement liée au fait que ces matériaux de liaison ont des faibles températures de fusion permettant de faire un frittage en solution pendant l'assemblage ou des propriétés mécaniques très malléables afin de garantir un remplissage parfait des contacts entre deux interfaces rugueuses.

De préférence, le matériau conducteur ionique employé à l'étape d) est choisi parmi :
a. les silicates, de préférence choisis parmi Li₂Si₂O₅, Li₂SiO₃, Li₂Si₂O₆, LiAlSiO₄, Li₄SiO₄, LiAlSi₂O₆
b. les composés vitrocéramiques choisis parmi les mélanges Li₃BO₃-Li₂SO₄, Li₃BO₃-Li₂SiO₄, Li₃BO₃-Li₂SO₄Li₂SiO₄,
c. les conducteurs ioniques des ions lithium choisis parmi : LiCI, LiBr, Lil, LiF, LiBH4, LiH, LiOH, LiBO₂, LiPO₃, LiNO₃, Li₃N, Li₂SO₄, LiVO₃, Li₂MoO₄, Li₂B₄O₇, ou un mélange de ces composés.
d. les électrolytes solides de type anti-perovskite choisis parmi : Li₃OA avec A un halogénure ou un mélange d'halogénures, de préférence au moins un des éléments choisi parmi F, Cl, Br, I ou un mélange de deux ou trois ou quatre de ces éléments ; Li₍₃₋ₓ₎M_{x/2}OA avec 0 < x ≤ 3, M un métal divalent, de préférence au moins un des éléments choisi parmi Mg, Ca, Ba, Sr ou un mélange de deux ou trois ou quatre de ces éléments, A un halogénure ou un mélange d'halogénures, de préférence au moins un des éléments choisi parmi F, Cl, Br, I ou un mélange de deux ou trois ou quatre de ces éléments ; Li₍₃₋ₓ₎N_{x/3}OA avec 0 ≤ x ≤ 3, N un métal trivalent, A un halogénure ou un mélange d'halogénures, de préférence au moins un des éléments choisi parmi F, Cl, Br, I ou un mélange de deux ou trois ou quatre de ces éléments ; ou LiCOX_{z}Y_{(1-z)}, avec X et Y des halogénures et 0 ≤ z ≤ 1.

Avantageusement, les matériaux conducteurs ioniques des ions lithium (LiCI, LiBr, Lil, LiF, LiBH4, LiH, LiOH, LiBO₂, LiPO₃, LiNO₃, Li₃N, Li₂SO₄, LiVO₃, Li₂MoO₄, Li₂B₄O₇, ou un mélange de ces composés) comportent au moins un composé additionnel, choisi de préférence, parmi les sels d'halogénures, et avantageusement choisi parmi les sels KCI, KBr, Kl, KF, NaCl, NaBr, Nal et NaF.

Selon un mode particulier de réalisation du procédé de l'invention, les électrodes (anode et cathode) sont poinçonnées selon un motif de découpe afin de réaliser des découpes aux dimensions de la batterie à réaliser. Le poinçonnage des électrodes peut être réalisé après l'étape c) de dépôt de la couche d'électrolyte, ou après l'étape d) de dépôt de la couche de matériau de conducteur ionique. Ces motifs comprennent trois découpes qui se jouxtent (par exemple en forme de U) et qui définissent la dimension de la batterie. Une deuxième fente peut être aménagée sur le côté non découpé afin de pouvoir assurer le passage des produits nécessaires à l'encapsulation du composant. Les électrodes anodiques et cathodiques sont ensuite empilées de manière alternée afin de constituer un empilement de plusieurs cellules élémentaires. Les motifs de découpes des anodes et cathodes sont placés en configuration « tête bêche ».

Dans un autre mode de réalisation particulier du procédé selon l'invention, les électrodes sont découpées avant l'étape c) de dépôt de la ou les couche(s) d'électrolyte, permettant le recouvrement des bords d'électrodes par un film d'électrolyte, protégeant ainsi le contact des électrodes avec l'atmosphère, et permettant d'améliorer la durée de vie calendaire de la batterie. Dans un mode de réalisation alternatif, les découpes sont réalisées sur les substrats avant les étapes a) et b) de dépôt de la couche d'anode et de cathode, permettant un recouvrement des bords d'électrodes par un film d'électrolyte. Ce mode de réalisation particulier présente l'avantage de recouvrir les bords d'électrodes avant le dépôt de la couche de matériau d'électrolyte, ce qui permet par la suite de réaliser aisément un film d'encapsulation autour des électrodes, surtout lorsque la couche d'électrolyte est composée de matériaux stables à l'humidité. Le recouvrement des bords latéraux des électrodes permet également de réduire les risques de court-circuit dans la cellule.

Enfin, une étape essentielle du procédé selon l'invention comprend un traitement thermique et/ou une compression mécanique de l'empilement obtenu précédemment pour obtenir une batterie en couches minces entièrement solide. Le traitement thermique permettant l'assemblage de la batterie est effectué à une température comprise entre 50 et 500°C, de préférence inférieure à 350 °C, et encore plus préférentiellement entre 100 et 200°C. Avantageusement, la température du traitement thermique ne dépasse pas 200°C. Avantageusement, la compression mécanique des couches à assembler est effectuée à une pression comprise entre 10 et 100 MPa, de préférence entre 20 et 50 MPa.

Dans un mode de réalisation particulier, on encapsule l'empilement après l'étape d'empilement et avant l'ajout des terminaisons, en déposant une couche mince d'encapsulation pour protéger la batterie contre l'atmosphère. La couche d'encapsulation doit être stable chimiquement, résister à une température élevée et être imperméable à l'atmosphère pour être une couche barrière efficace. Préférentiellement, la couche mince d'encapsulation est constituée d'une couche polymérique, de céramique, en verre ou en vitrocéramique, pouvant être par exemple sous forme d'oxyde, de nitrure, de phosphates, d'oxynitrure, ou de siloxane. Encore plus préférentiellement, cette couche d'encapsulation est revêtue d'une résine époxy ou de silicone ou de parylène.

La couche d'encapsulation peut être avantageusement déposée par dépôt chimique en phase vapeur (CVD), ce qui permet d'avoir un recouvrement de l'ensemble des surfaces de l'empilement accessible. Ainsi, l'encapsulation peut ainsi réalisée directement sur les empilements, le revêtement pouvant pénétrer dans l'ensemble des cavités disponibles. Avantageusement, une seconde couche d'encapsulation organique peut être déposée sur la première couche d'encapsulation pour augmenter la protection des cellules batteries de leur environnement externe. Typiquement, le dépôt de cette seconde couche peut être réalisé par une imprégnation de silicone. Le choix d'un tel matériau vient du fait qu'il résiste à des températures élevées et la batterie peut ainsi être assemblée aisément par soudure sur des cartes électroniques sans apparition de transitions vitreuses.

Avantageusement, la batterie est encapsulée sur quatre des six faces de l'empilement. Les couches d'encapsulation entourent la périphérie de l'empilement, le reste de la protection à l'atmosphère étant assuré par les couches obtenues par les terminaisons. De manière préférentielle les connections cathodiques et anodiques sont décalées latéralement, ce qui permet à la couche d'encapsulation de fonctionner comme diélectrique pour éviter la présence de court-circuit sur ces extrémités.

Une fois l'empilement réalisé, et après l'étape d'encapsulation de l'empilement si cette dernière est réalisée, des terminaisons (contacts électriques) sont ajoutées au niveau où les collecteurs de courant cathodiques, respectivement anodiques sont apparents (non revêtus d'électrolyte isolant). Ces zones de contact peuvent être sur les côtés opposés de l'empilement pour collecter le courant mais également ou sur des côtés adjacents.

Pour réaliser les terminaisons, l'empilement, éventuellement enrobé, est découpé suivant des plans de coupe permettant d'obtenir des composants de batterie unitaires, avec la mise à nue sur chacun des plans de coupe des connexions (+) et (-) de la batterie. Les connexions peuvent ensuite être métallisées à l'aide de techniques de dépôt plasma connu de l'homme du métier et / ou par immersion dans une résine époxy conductrice (chargée à l'argent) et / ou un bain d'étain en fusion. Les terminaisons permettent de reprendre les connections électriques alternativement positives et négatives sur chacune des extrémités. Ces terminaisons permettent de réaliser les connections électriques en parallèle entre les différents éléments de batterie. Pour cela, seule les connections (+) sortent sur une extrémité, et les (-) sont disponibles sur les autres extrémités.

Cette batterie étant entièrement solide, et utilisant un matériau à insertion du lithium comme matériau d'anode, les risques de formation de dendrites de lithium métallique durant les étapes de recharge sont nuls et la capacité d'insertion de l'anode en lithium devient limitée.

Aussi, afin de garantir de bonnes performances en cyclage de la batterie selon l'invention l'architecture de batterie pour laquelle la capacité surfacique des cathodes est supérieure ou égale à la capacité surfacique des anodes est préférée.

Les couches constitutives de la batterie étant entièrement solide, le risque de formation de dendrites de lithium n'existe plus lorsque l'anode est totalement chargée. Ainsi, une telle architecture de batterie évite la création de surcharge de cellules de batterie.

Aussi, la réalisation d'une telle batterie avec des capacités surfaciques de cathodes supérieures ou égales à celles des anodes permet d'accroitre les performances en termes de durée de vie, exprimée en nombre de cycles. En effet, les électrodes étant denses et entièrement solides, le risque de perte de contact électrique entre les particules est nul. De plus, il n'existe plus de risque de dépôt de lithium métallique dans l'électrolyte ou dans les porosités des électrodes, et enfin le risque de détérioration de la structure cristalline du matériau de cathode est inexistant.

Nous indiquons ici quelques modes opératoires concrets pour réaliser l'invention. On prépare une suspension du matériau d'anode par broyage/dispersion d'une poudre (par exemple de Li₄Ti₅O₁₂) dans de l'éthanol absolu (typiquement à environ 10g/L avec quelques ppm d'acide citrique). On prépare une suspension de matériau de cathode par broyage/dispersion d'une poudre (par exemple de LiMn₂O₄), typiquement dans de l'eau à environ 10 g/L. On prépare également une suspension de matériau d'électrolyte céramique par broyage/dispersion d'une poudre (par exemple de Li₃Al_{0,4}Sc_{1,6}(PO₄)₃), typiquement dans de l'éthanol absolu (par exemple à 5 g/L). Pour toutes ces suspensions on conduit le broyage de manière à obtenir des suspensions stables avec des tailles de particules inférieures à 100 nm.

Les électrodes négatives peuvent être préparées par dépôt électrophorétique des nanoparticules de Li₄Ti₅O₁₂ contenues dans la suspension décrite ci-dessus, sous la forme d'un film mince déposé typiquement sur les deux faces d'un premier substrat (épaisseur par exemple 1 µm) ; cette couche d'anode est ensuite traitée thermiquement à environ 600°C.

Les électrodes positives peuvent être préparées de la même manière, par dépôt électrophorétique à partir de la suspension de LiMn₂O décrite ci-dessus, sous la forme d'un film mince déposé typiquement sur les deux faces d'un deuxième substrat ; cette couche de cathode (épaisseur par exemple 1 µm) est ensuite traitée thermiquement à environ 600°C.

Après ces traitements thermiques, les anodes et cathode sont recouvertes d'une couche d'électrolyte céramique (par exemple en Li₃Al_{0,4}Sc_{1,6}(PO₄)₃, abrégé LASP), déposée par exemple par EPD. Une épaisseur de LASP d'environ 500 nm sur chaque électrode convient pour ce matériau. Ces films d'électrolyte sont ensuite séchés et consolidés par traitement thermique à environ 600°C.

La formulation de conducteur ionique utilisée pour faire l'assemblage de la cellule batterie est la suivante. On prépare une solution d'un matériau conducteur ionique, par exemple une solution aqueuse de LiPO₃ à 0.3% molaire par mélange stœchiométrique d'acide métaphosphorique HPO₃ et de LiOH.

Les électrodes revêtues du film d'électrolyte solide sont ensuite revêtues d'une fine couche de conducteurs ioniques, de préférence par dip-coating (trempage) suivi d'un séchage pendant 5h à l'air. Ensuite on empile l'anode et la cathode sur leurs faces d'électrolyte revêtu comme on vient de décrire pour réaliser l'assemblage ; l'ensemble est maintenu sous pression (typiquement pendant 15 minutes à 500°C). On obtient ainsi une batterie qui peut être testée par cyclage entre 2 et 2,7 V.

## Revendications

1. Procédé de fabrication d'une batterie en couches minces entièrement solide comprenant les étapes successives suivantes :
a) on dépose une couche comprenant au moins un matériau d'anode, appelée ici « couche de matériau d'anode », sur son substrat conducteur, de préférence sélectionné dans le groupe formé par une feuille métallique, une bande métallique, une feuille isolante métallisée, une bande isolante métallisée, un film isolant métallisé, lesdits substrats conducteurs, ou leurs éléments conducteurs, pouvant servir comme collecteur de courant anodique ;
b) on dépose une couche comprenant au moins un matériau de cathode, appelée ici « couche de matériau de cathode », sur son substrat conducteur, de préférence sélectionné dans le groupe formé par une feuille métallique, une bande métallique, une feuille isolante métallisée, une bande isolante métallisée, un film isolant métallisé, lesdits substrats conducteurs, ou leurs éléments conducteurs, pouvant servir comme collecteur de courant cathodique, étant entendu que les étapes a) et b) peuvent être inversées ;
c) on dépose une couche comprenant au moins un matériau d'électrolyte solide, appelée ici « couche de matériau d'électrolyte » sur au moins une couche obtenue à l'étape a) et/ou b) ;
d) on dépose une couche d'une solution d'un matériau conducteur ionique, de préférence, au moins un sel de lithium:
∘ soit sur la couche de matériau d'anode revêtue d'une couche de matériau d'électrolyte solide et/ou sur la couche de matériau de cathode revêtue ou non d'une couche de matériau d'électrolyte solide ;
∘ soit sur la couche de matériau de cathode revêtue d'une couche de matériau d'électrolyte solide et/ou sur la couche de matériau d'anode revêtue ou non d'une couche de matériau d'électrolyte solide ;
e) on sèche la dite couche de la dite solution du matériau conducteur ionique obtenue à l'étape d) afin d'obtenir une couche d'un matériau conducteur ionique; l'épaisseur de la couche dudit matériau conducteur ionique étant inférieure à 10 µm, de préférence inférieure à 5 µm, et encore plus préférentiellement inférieure à 2 µm ;
f) on empile face sur face successivement une couche de matériau d'anode obtenue à l'étape a), c) ou e) avec une couche de matériau de cathode obtenue à l'étape b), c) ou e), étant entendu que l'empilement comprend au moins une couche de matériau d'électrolyte solide obtenue à l'étape c) et au moins une couche d'un matériau conducteur ionique obtenue à l'étape e) ;
g) on effectue un traitement thermique et/ou une compression mécanique de l'empilement obtenu à l'étape f) pour obtenir une batterie en couches minces entièrement solide,
sachant que l'épaisseur de chacune des couches minces présentes au sein de la batterie est inférieure à 10 µm et préférentiellement inférieure à 5 µm.

2. Procédé selon la revendication 1, **caractérisé en ce qu'**après l'étape a) et/ou b) de dépôt de la couche d'anode et/ou de cathode, et/ou après l'étape c) de dépôt de la couche d'électrolyte, un traitement thermique de recristallisation de la couche respectivement d'anode et/ou de cathode et/ou d'électrolyte est effectué, de préférence à une température comprise entre 300°C et 1000°C, plus préférentiellement entre 400°C et 800°C, et encore plus préférentiellement entre 500°C et 700°C.

3. Procédé selon les revendications 1 ou 2, **caractérisé en ce que** le matériau conducteur ionique employé à l'étape d) est choisi parmi :
a. les silicates, de préférence choisis parmi Li₂Si₂O₅, Li₂SiO₃, Li₂Si₂O₆, LiAlSiO₄, Li₄SiO₄, LiAlSi₂O₃
b. les composés vitrocéramiques choisis parmi Li₃BO₃-Li₂SO₄, Li₃BO₃-Li₂SiO₄, Li₃BO₃-Li₂SO₄Li₂SiO₄,
c. les conducteurs ioniques des ions lithium choisis parmi : LiCl, LiBr, Lil, LiF, LiBH4, LiH, LiOH, LiBO₂, LiPO₃, LiNO₃, Li₃N, Li₂SO₄, LiVO₃, Li₂MoO₄, Li₂B₄O₇, ou un mélange de ces composés,
d. les électrolytes solides de type anti-perovskite choisis parmi : Li₃OA avec A un halogénure ou un mélange d'halogénures, de préférence au moins un des éléments choisi parmi F, Cl, Br, l ou un mélange de deux ou trois ou quatre de ces éléments ; Li₍₃₋ₓ₎M_{x/2}OA avec 0 < x ≤ 3, M un métal divalent, de préférence au moins un des éléments choisi parmi Mg, Ca, Ba, Sr ou un mélange de deux ou trois ou quatre de ces éléments, A un halogénure ou un mélange d'halogénures, de préférence au moins un des éléments choisi parmi F, Cl, Br, I ou un mélange de deux ou trois ou quatre de ces éléments ; Li₍₃₋ₓ₎N_{x/3}OA avec 0 ≤ x ≤ 3, N un métal trivalent, A un halogénure ou un mélange d'halogénures, de préférence au moins un des éléments choisi parmi F, Cl, Br, I ou un mélange de deux ou trois ou quatre de ces éléments ; ou LiCOX_{z}Y_{(1-z)}, avec X et Y des halogénures et 0 ≤ z ≤ 1,
lesdits matériaux conducteurs ioniques des ions lithium étant de préférence utilisés sous forme amorphe.

4. Procédé selon la revendication 3, caractérisé en que les matériaux conducteurs ioniques des ions lithium comportent au moins un composé additionnel, choisi de préférence, parmi les sels d'halogénures, et avantageusement choisi parmi les sels KCI, KBr, Kl, KF, NaCl, NaBr, Nal et NaF.

5. Procédé selon l'une quelconque des revendications 1 à 4, **caractérisé en ce que** les couches d'anode, de cathode et d'électrolyte solide sont déposées parmi au moins l'une des techniques suivantes :
(i) dépôt physique par phase vapeur (PVD), et plus particulièrement par évaporation sous vide, par ablation laser, par faisceau d'ions, par pulvérisation cathodique ;
(ii) dépôt chimique par phase vapeur (CVD), et plus particulièrement assisté par plasma (PECVD), assisté par laser (LACVD), ou assisté par aérosol (AA-CVD) ;
(iii) dépôt de couches atomiques (ALD) ;
(iv) électropulvérisation ;
(v) électrophorèse ;
(vi) aérosol déposition ;
(vii) sol-gel ;
(viii)trempage, plus particulièrement par trempage-retrait (dip-coating), trempage-tournette (spin-coating), ou par le procédé Langmuir-Blodgett.

6. Procédé selon l'une quelconque des revendications 1 à 5, **caractérisé en ce que** les couches de matériau d'anode et/ou de cathode comprennent en outre des matériaux conducteurs électroniques, et en particulier de graphite, et/ou des nanoparticules de matériaux conducteurs des ions lithium, du type de ceux utilisés pour réaliser les films d'électrolyte, ou des matériaux polymère comportant des groupements ioniques.

7. Procédé selon l'une quelconque des revendications 1 à 6, **caractérisé en ce que** les couches d'anode et/ou de cathode et/ou d'électrolyte sont réalisées par un dépôt de nanoparticules respectivement de matériau d'anode, de cathode ou d'électrolyte parmi l'une au moins des techniques suivantes : électropulvérisation, électrophorèse, aérosol déposition, trempage, et sont de préférence toutes déposées par électrophorèse ; et sachant que la taille desdites nanoparticules de matériau d'électrolyte étant de préférence inférieure à 100 nm, et encore plus préférentiellement inférieure à 30 nm.

8. Procédé selon l'une quelconque des revendications 1 à 7, **caractérisé en ce que** le traitement thermique est réalisé à une température comprise entre 50°C et 500°C, de préférence à une température inférieure à 350 °C, et encore plus préférentiellement entre 100°C et 200°C et/ou **en ce que** la compression mécanique des couches à assembler est réalisée à une pression comprise entre 10 et 100 MPa, de préférence entre 20 et 50 MPa.

9. Procédé selon l'une quelconque des revendications 1 à 8, **caractérisé en ce que** la couche de matériau d'anode a) est réalisée à partir d'un matériau choisi parmi :
(i) les oxynitrures d'étain (de formule typique SnOₓN_{y}) ;
(ii) le phosphate de fer lithié (de formule typique LiFePO₄) ;
(iii) les oxynitrures mixtes de silicium et étain (de formule typique SiₐSn_{b}O_{y}N_{z} avec a>0, b>0, a+b≤2, 0<y≤4, 0<z≤3) (appelés aussi SiTON), et en particulier le SiSn_{0,87}O_{1,2}N_{1,72} ; ainsi que les oxynitrures-carbures de formule typique SiₐSn_{b}C_{c}O_{y}N_{z} avec a>0, b>0, a+b≤2, 0<c<10, 0<y<24, 0<z<17; SiₐSn_{b}C_{c}O_{y}N_{z}Xₙ avec Xₙ au moins un des éléments parmi F, Cl, Br, l, S, Se, Te, P, As, Sb, Bi, Ge, Pb et a>0, b>0, a+b>0, a+b≤2, 0<c<10, 0<y<24 et 0<z<17; et SiₐSn_{b}O_{y}N_{z}Xₙ avec Xₙ au moins un des éléments parmi F, Cl, Br, l, S, Se, Te, P, As, Sb, Bi, Ge, Pb et a>0, b>0, a+b≤2, 0<y≤4 et 0<z≤3;
(iv) les nitrures de type SiₓN_{y} (en particulier avec x=3 et y=4), SnₓN_{y} (en particulier avec x=3 et y=4), ZnₓN_{y} (en particulier avec x=3 et y=4), Li₃₋ₓMₓN (avec M = Co, Ni, Cu) ;
(v) les oxydes SnO₂, Li₄Ti₅O₁₂, SnB_{0,6}P_{0,4}O_{2,9} et TiO₂.

10. Procédé selon l'une quelconque des revendications 1 à 9, **caractérisé en ce que** la couche de matériau de cathode b) est réalisée à partir d'un matériau de cathode choisi parmi :
(i) les oxydes LiMn₂O₄, LiCoO₂, LiNiO₂, LiMn_{1,5}Ni_{0,5}O₄, LiMn_{1,5}Ni_{0,5-x}XₓO₄ (où X est sélectionné parmi Al, Fe, Cr, Co, Rh, Nd, autres terres rares, et où 0 < x < 0,1), LiFeO₂, LiMn_{1/3}Ni_{1/3}Co_{1/3}O₄ ;
(ii) les phosphates LiFePO₄, LiMnPO₄, LiCoPO₄, LiNiPO₄, Li₃V₂(PO₄)₃ ; les phosphates de formule LiMM'PO₄, avec M et M' (M ≠ M') sélectionnés parmi Fe, Mn, Ni, Co, V ;
(iii) toutes les formes lithiées des chalcogénides suivants : V₂O₅, V₃O₈, TiS₂, les oxysulfures de titane (TiO_{y}S_{z}), les oxysulfures de tungstène (WO_{y}S_{z}), CuS, CuS₂.

11. Procédé selon l'une quelconque des revendications 1 à 10, **caractérisé en ce que** la couche de matériau d'électrolyte c) est réalisée à partir de matériau d'électrolyte choisi parmi :
o les grenats de formule Li_{d}A¹ₓA²_{y}(TO₄)_{z} où
▪ A¹ représente un cation de degré d'oxydation +II, de préférence Ca, Mg, Sr, Ba, Fe, Mn, Zn, Y, Gd ; et où
▪ A² représente un cation de degré d'oxydation +III, de préférence Al, Fe, Cr, Ga, Ti, La ; et où
▪ (TO₄) représente un anion dans lequel T est un atome de degré d'oxydation +IV, situé au centre d'un tétraèdre formé par les atomes d'oxygène, et dans lequel TO₄ représente avantageusement l'anion silicate ou zirconate, sachant que tout ou partie des éléments T d'un degré d'oxydation +IV peuvent être remplacés par des atomes d'un degré d'oxydation +III ou +V, tels que Al, Fe, As, V, Nb, In, Ta ;
▪ sachant que : d est compris entre 2 et 10, préférentiellement entre 3 et 9, et encore plus préférentiellement entre 4 et 8 ; x est de 3 mais peut être compris entre 2,6 et 3,4 (de préférence entre 2,8 et 3,2) ; y est de 2 mais peut être compris entre 1,7 et 2,3 (de préférence entre 1,9 et 2,1) et z est de 3 mais peut être compris entre 2.9 et 3.1;
o les grenats, de préférence choisi parmi : le Li₇La₃Zr₂O₁₂; le Li₆La₂BaTa₂O₁₂ ; le Li_{5,5}La₃Nb_{1,75}In_{0,25}O₁₂ ; le Li₅La₃M₂O₁₂ avec M = Nb ou Ta ou un mélange des deux composés ; le Li₇₋ₓBaₓLa₃₋ₓM₂O₁₂ avec 0≤x≤1 et M = Nb ou Ta ou un mélange des deux composés ; le Li₇₋ₓLa₃Zr₂₋ₓMₓO₁₂ avec 0≤x≤2 et M = Al, Ga ou Ta ou un mélange de deux ou trois de ces composés ;
o les phosphates lithiés, de préférence choisi parmi : le Li₃PO₄ ; le Li₃(Sc₂₋ₓMₓ)(PO₄)₃ avec M=AI ou Y et 0 ≤ x ≤ 1 ; le Li₁₊ₓMₓ(Sc)₂₋ₓ(PO₄)₃ avec M = Al, Y, Ga ou un mélange des trois composés et 0 ≤ x ≤ 0,8 ; le Li₁₋ₓMₓ(Ga_{1-y}Sc_{y})₂₋ₓ(PO₄)₃ avec 0 ≤ x ≤ 0,8 ; 0 ≤ y ≤ 1 et M= Al ou Y ou un mélange des deux composés; le Li₁₊ₓMₓ(Ga)₂₋ₓ(PO₄)₃ avec M = Al, Y ou un mélange des deux composés et 0 ≤ x ≤ 0,8 ; le Li₁₊ₓAlₓTi₂₋ₓ(PO₄)₃ avec 0 ≤ x ≤ 1, ou le Li₁₊ₓAlₓGe₂₋ₓ(PO₄)₃ avec 0 ≤ x ≤ 1 ; ou le Li_{1-x+z}Mₓ(Ge_{1-y}Ti_{y})₂₋ₓSi_{z}P_{3-z}O₁₂ avec 0≤x≤0,8 et 0≤y≤1,0 & 0≤z≤0,6 et M= Al, Ga ou Y ou un mélange de deux ou trois de ces composés ; le Li_{3+y}(Sc₂₋ₓMₓ)Q_{y}P_{3-y}O₁₂, avec M = Al et/ou Y et Q = Si et/ou Se, 0 ≤ x ≤ 0,8 et 0 ≤ y ≤ 1 ; ou le Li_{1+x+y}MₓSc₂₋ₓQ_{y}P_{3-y}O₁₂, avec M = Al, Y, Ga ou un mélange des trois composés et Q = Si et/ou Se, 0 ≤ x ≤ 0,8 et 0 ≤ y ≤ 1 ; ou le Li_{1+x+y+z}Mₓ(Ga_{1-y}Sc_{y})₂₋ₓQ_{z}P_{3-z}O₁₂ avec 0 ≤ x ≤ 0,8 ; 0 ≤ y ≤ 1 ; 0 ≤ z ≤ 0,6 avec M = Al ou Y ou un mélange des deux composés et Q= Si et/ou Se ; ou Li₁₊ₓNₓM₂₋ₓP₃O₁₂, avec 0 ≤ x ≤ 1 et N= Cr et/ou V, M = Sc, Sn, Zr, Hf, Se ou Si, ou un mélange de ces composés ;
o les composés soufrés lithiés, de préférence choisi parmi : le LiₓAl_{z-y}Ga_{y}S_{w}(PO₄)_{c} avec 4<w<20, 3<x<10, 0≦y<1, 1≦z<4 et 0<c<20 ; le LiₓAl_{z-y}Ga_{y}S_{w}(BO₃)_{c} avec 4<w<20, 3<x<10, 0≦y<1, 1≦z<4 et 0<c<20; le LiₓAl_{z-y}Sc_{y}S_{w}(PO₄)_{c} avec 4<w<20, 3<x<10, 0≦y<1, 1≦z<4 et 0<c<20 ; le LiₓAl_{z-y}Sc_{y}S_{w}(BO₃)_{c} avec 4<w<20, 3<x<10, 0≦y<1, 1≦z<4 et 0<c<20 ; le LiₓGe_{z-y}Si_{y}S_{w}(PO₄)_{c} avec 4<w<20, 3<x<10, 0≦y<1, 1≦z<4 et 0<c<20 ; le LiₓGe(_{z-y})Si_{y}S_{w}(BO₃)_{c} avec 4<w<20, 3<x<10, 0≦y<1, 1≦z<4 et 0<c<20 ;
o les borates lithiés, de préférence choisi parmi : le Li₃(Sc₂₋ₓMₓ)(BO₃)₃ avec M=AI ou Y et 0 ≤ x ≤ 1 ; le Li₁₊ₓMₓ(Sc)₂₋ₓ(BO₃)₃ avec M = Al, Y, Ga ou un mélange des trois composés et 0 ≤ x ≤ 0,8 ; 0 ≤ y ≤ 1 ; le Li₁₊ₓMₓ(Ga_{1-y}Sc_{y})₂₋ₓ(BO₃)₃ avec 0 ≤ x ≤ 0,8 ; 0 ≤ y ≤ 1 et M= Al ou Y ; le Li₁₊ₓMₓ(Ga)₂₋ₓ(BO₃)₃ avec M = Al, Y ou un mélange des deux composés et 0 ≤ x ≤ 0,8 ; 0 ≤ y ≤ 1 ; le Li₃BO₃, le Li₃BO₃-Li₂SO₄, le Li₃BO₃-Li₂SiO₄, le Li₃BO₃-Li₂SiO₄-Li₂SO₄ ;
∘ les oxynitrures, de préférence choisis parmi Li₃PO₄₋ₓN_{2x/3}, Li₄SiO₄₋ₓN_{2x/3}, Li₄GeO₄₋ₓN_{2x/3} avec 0 < x < 4 ou Li₃BO₃₋ₓN_{2x/3} avec 0 < x < 3 ; les matériaux à base d'oxynitrures de lithium de phosphore ou de bore (appelés LiPON et LIBON) pouvant également contenir du silicium, du soufre, du zirconium, de l'aluminium, ou une combinaison d'aluminium, bore, soufre et/ou silicium, et du bore pour les de lithium de phosphore ;
o les oxydes lithiés, de préférence choisis parmi le Li₇La₃Zr₂O₁₂ ou le Li₅₊ₓLa₃(Zrₓ,A₂₋ₓ)O₁₂ avec A=Sc, Y, Al, Ga et 1,4 ≤ x ≤ 2 ou le Li_{0,35}La_{0,55}TiO₃ ;
o les silicates, de préférence choisis parmi Li₂Si₂O₅, Li₂SiO₃, Li₂Si₂O₆, LiAlSiO₄, Li₄SiO₄, LiAlSi₂O₆;
o les électrolytes solides de type anti-perovskite choisis parmi : Li₃OA avec A un halogénure ou un mélange d'halogénures, de préférence au moins un des éléments choisi parmi F, Cl, Br, I ou un mélange de deux ou trois ou quatre de ces éléments ; Li₍₃₋ₓ)M_{x/2}OA avec 0 < x ≤ 3, M un métal divalent, de préférence au moins un des éléments choisi parmi Mg, Ca, Ba, Sr ou un mélange de deux ou trois ou quatre de ces éléments, A un halogénure ou un mélange d'halogénures, de préférence au moins un des éléments choisi parmi F, Cl, Br, l ou un mélange de deux ou trois ou quatre de ces éléments ; Li₍₃₋ₓ₎N_{x/3}OA avec 0 ≤ x ≤ 3, N un métal trivalent, A un halogénure ou un mélange d'halogénures, de préférence au moins un des éléments choisi parmi F, Cl, Br, I ou un mélange de deux ou trois ou quatre de ces éléments ; ou LiCOX_{z}Y_{(1-z)}, avec X et Y des halogénures et 0 ≤ z ≤ 1.

12. Procédé selon l'une quelconque des revendications 1 à 11, **caractérisé en ce qu'**il comprend en outre une étape h) d'encapsulation de la batterie obtenue à l'étape g) par dépôt d'au moins une couche d'encapsulation de matériau céramique, vitreux ou vitrocéramique.

13. Batterie susceptible d'être obtenue par le procédé selon l'une quelconque des revendications 1 à 12.

14. Batterie selon la revendication 13, **caractérisée en ce que** l'empilement des couches de cathode et d'anode est décalé latéralement, et **en ce qu'**elle comprend de préférence au moins une couche d'encapsulation, qui peut être une couche en oxyde céramique, en verre ou en vitrocéramique, et **en ce que** ladite batterie comprend de préférence une deuxième couche d'encapsulation organique déposée sur ladite première couche d'encapsulation, ladite deuxième couche d'encapsulation étant de préférence en silicone ou parylène.

15. Batterie selon la revendication 13 ou 14, **caractérisée en ce que** ladite au moins une couche d'encapsulation revêt totalement quatre des six faces de ladite batterie et partiellement les deux faces restantes, située sous les métallisations servant à la connectique de la batterie.

## Patentansprüche

1. Verfahren zur Herstellung einer reinen FestkörperDünnschichtbatterie, das die folgenden aufeinanderfolgenden Schritte umfasst:
a) Abscheiden einer Schicht, die mindestens ein Anodenmaterial umfasst, hier "Anodenmaterialschicht" genannt, auf deren leitendem Substrat, vorzugsweise ausgewählt aus der Gruppe, die von einer Metallfolie, einem Metallband, einer metallisierten Isolierfolie, einem metallisierten Isolierband, einem metallisierten Isolierfilm gebildet wird, wobei die leitenden Substrate oder deren leitende Elemente als Anodenstromkollektor dienen können;
b) Abscheiden einer Schicht, die mindestens ein Kathodenmaterial umfasst, hier "Kathodenmaterialschicht" genannt, auf deren leitendem Substrat, vorzugsweise ausgewählt aus der Gruppe, die von einer Metallfolie, einem Metallband, einer metallisierten Isolierfolie, einem metallisierten Isolierband, einem metallisierten Isolierfilm gebildet wird, wobei die leitenden Substrate oder deren leitende Elemente als Kathodenstromkollektor dienen können, wobei die Schritte a) und b) umgedreht werden können;
c) Abscheiden einer Schicht, die mindestens ein Festkörperelektrolytmaterial umfasst, hier "Elektrolytmaterialschicht" genannt, auf mindestens einer Schicht, die im Schritt a) und/oder b) erhalten wurde;
d) Abscheiden einer Schicht einer Lösung eines ionisch leitenden Materials, vorzugsweise mindestens eines Lithiumsalzes:
- entweder auf der mit einer Festkörperelektrolytmaterialschicht überzogenen Anodenmaterialschicht und/oder auf der mit einer Festkörperelektrolytmaterialschicht überzogenen oder nicht überzogenen Kathodenmaterialschicht;
- oder auf der mit einer Festkörperelektrolytmaterialschicht überzogenen Kathodenmaterialschicht und/oder auf der mit einer Festkörperelektrolytmaterialschicht überzogenen oder nicht überzogenen Anodenmaterialschicht;
e) Trocknen der Schicht der Lösung des ionisch leitenden Materials, die im Schritt d) erhalten wurde, um eine Schicht eines ionisch leitenden Materials zu erhalten; wobei die Dicke der Schicht des ionisch leitenden Materials weniger als 10 µm, vorzugsweise weniger als 5 µm, und noch stärker bevorzugt weniger als 2 µm beträgt;
f) aufeinanderfolgendes Stapeln einer Anodenmaterialschicht, die im Schritt a), c) oder e) erhalten wurde, Seite auf Seite mit einer Kathodenmaterialschicht, die im Schritt b), c) oder e) erhalten wurde, wobei der Stapel mindestens eine Festkörperelektrolytmaterialschicht, die im Schritt c) erhalten wurde, und mindestens eine Schicht eines ionisch leitenden Materials umfasst, die im Schritt e) erhalten wurde;
g) Durchführen einer thermischen Behandlung und/oder einer mechanischen Kompression des im Schritt f) erhaltenen Stapels, um eine reine Festkörperdünnschichtbatterie zu erhalten,
wobei die Dicke jeder der in der Batterie vorhandenen Dünnschichten weniger als 10 µm und vorzugsweise weniger als 5 µm beträgt.

2. Verfahren nach Anspruch 1, **dadurch gekennzeichnet, dass** nach dem Schritt a) und/oder b) des Abscheidens der Anoden- und/oder der Kathodenschicht, und/oder nach dem Schritt c) des Abscheidens der Elektrolytschicht eine thermische Behandlung zur Rekristallisation der Anoden- bzw. der Kathoden- bzw. der Elektrolytschicht, vorzugsweise bei einer Temperatur im Bereich zwischen 300 °C und 1.000 °C, stärker bevorzugt zwischen 400 °C und 800 °C, und noch stärker bevorzugt zwischen 500 °C und 700 °C durchgeführt wird.

3. Verfahren nach den Ansprüchen 1 oder 2, **dadurch gekennzeichnet, dass** das im Schritt d) eingesetzte ionisch leitende Material ausgewählt ist aus:
a. den Silikaten, vorzugsweise ausgewählt aus Li₂Si₂O₅, Li₂SiO₃, Li₂Si₂O₆, LiAlSiO₄, Li₄SiO₄, LiAlSi₂O₆,
b. den Glaskeramikverbindungen, ausgewählt aus Li₃BO₃-Li₂SO₄, Li₃BO₃-Li₂SiO₄, Li₃BO₃-Li₂SO₄Li₂SiO₄,
c. den ionischen Leitern der Lithiumionen, ausgewählt aus: LiCl, LiBr, LiI, LiF, LiBH4, LiH, LiOH, LiBO₂, LiPO₃, LiNO₃, Li₃N, Li₂SO₄, LiVO₃, Li₂MoO₄, Li₂B₄O₇, oder einer Mischung dieser Verbindungen,
d. den Festkörperelektrolyten vom Typ Anti-Perowskit, ausgewählt aus: Li₃OA, wobei A ein Halogenid oder eine Mischung von Halogeniden, vorzugsweise mindestens eines der Elemente, ausgewählt aus F, Cl, Br, I, oder eine Mischung von zwei oder drei oder vier dieser Elemente ist; Li₍₃₋ₓ₎M_{x/2}OA, wobei 0 < x ≤ 3, M ein zweiwertiges Metall, vorzugsweise mindestens eines der Elemente, ausgewählt aus Mg, Ca, Ba, Sr, oder eine Mischung von zwei oder drei oder vier dieser Elemente, A ein Halogenid oder eine Mischung von Halogeniden, vorzugsweise mindestens eines der Elemente, ausgewählt aus F, Cl, Br, I, oder eine Mischung von zwei oder drei oder vier dieser Elemente ist; Li(₃₋ₓ)N_{x/3}OA, wobei 0 ≤ x ≤ 3, N ein dreiwertiges Metall, A ein Halogenid oder eine Mischung von Halogeniden, vorzugsweise mindestens eines der Elemente, ausgewählt aus F, Cl, Br, I, oder eine Mischung von zwei oder drei oder vier dieser Elemente ist; oder LiCOX_{z}Y_{(1-z)}, wobei X und Y Halogenide sind und 0 ≤ z ≤ 1,
wobei die ionisch leitenden Materialien der Lithiumionen vorzugsweise in amorpher Form verwendet werden.

4. Verfahren nach Anspruch 3, **dadurch gekennzeichnet, dass** die ionisch leitenden Materialien der Lithiumionen mindestens eine zusätzliche Verbindung enthalten, vorzugsweise ausgewählt aus den Salzen von Halogeniden und vorteilhafterweise ausgewählt aus den Salzen KCl, KBr, KI, KF, NaCl, NaBr, NaI und NaF.

5. Verfahren nach einem der Ansprüche 1 bis 4, **dadurch gekennzeichnet, dass** die Anoden-, die Kathoden- und die Festkörperelektrolytschicht mit mindestens einer der folgenden Techniken abgeschieden werden:
(i) physikalische Dampfphasenabscheidung (PVD), und insbesondere mittels Vakuumverdampfen, mittels Laserablation, mittels Ionenstrahl, mittels Kathodenzerstäubung;
(ii) chemische Dampfphasenabscheidung (CVD), und insbesondere plasmagestützt (PECVD), lasergestützt (LACVD), oder aerosolgestützt (AA-CVD);
(iii) Atomlagenabscheidung (ALD);
(iv) Elektrospray;
(v) Elektrophorese;
(vi) Aerosolabscheidung;
(vii) Sol-Gel;
(viii) Tauchen, insbesondere mittels Tauchbeschichtung (Dip Coating), Schleuderbeschichtung (Spin Coating) oder mittels des Langmuir-Blodgett-Verfahrens.

6. Verfahren nach einem der Ansprüche 1 bis 5, **dadurch gekennzeichnet, dass** die Anoden- und/oder die Kathodenmaterialschicht weiter elektrisch leitende Materialien, und insbesondere Graphit, und/oder Nanopartikel von Lithiumionen leitenden Materialien vom Typ derjenigen, die zur Herstellung der Elektrolytfilme verwendet werden, oder Polymermaterialien umfassen, die ionische Gruppen enthalten.

7. Verfahren nach einem der Ansprüche 1 bis 6, **dadurch gekennzeichnet, dass** die Anoden- und/oder die Kathoden- und/oder die Elektrolytschicht mittels eines Abscheidens von Anoden-, von Kathoden- bzw. von Elektrolytmaterial-Nanopartikeln mittels mindestens einer der folgenden Techniken hergestellt werden: Elektrospray, Elektrophorese, Aerosolabscheidung, Tauchen, und vorzugsweise alle mittels Elektrophorese abgeschieden werden; und wobei die Größe der Elektrolytmaterial-Nanopartikel vorzugsweise weniger als 100 nm, und noch stärker bevorzugt weniger als 30 nm beträgt.

8. Verfahren nach einem der Ansprüche 1 bis 7, **dadurch gekennzeichnet, dass** die thermische Behandlung bei einer Temperatur im Bereich zwischen 50 °C und 500 °C, vorzugsweise bei einer Temperatur von weniger als 350 °C, und noch stärker bevorzugt zwischen 100 °C und 200 °C ausgeführt wird, und/oder dadurch, dass die mechanische Kompression der zu verbindenden Schichten bei einem Druck im Bereich zwischen 10 und 100 MPa, vorzugsweise zwischen 20 und 50 MPa ausgeführt wird.

9. Verfahren nach einem der Ansprüche 1 bis 8, **dadurch gekennzeichnet, dass** die Anodenmaterialschicht a) aus einem Material hergestellt wird, ausgewählt aus:
(i) den Zinnoxynitriden (der typischen Formel SnOₓN_{y});
(ii) dem Lithium-Eisen-Phosphat (der typischen Formel LiFePO4) ;
(iii) den Silizium-Zinn-Mischoxynitriden (der typischen Formel SiₐSn_{b}O_{y}N_{z}, wobei a > 0, b > 0, a + b ≤ 2, 0 < y ≤ 4, 0 < z ≤ 3) (auch SiTON genannt), und insbesondere SiSn_{0,87}O_{1,2}N_{1,72}; sowie den Oxynitrid-Carbiden der typischen Formel SiₐSn_{b}C_{c}O_{y}N_{z}, wobei a > 0, b > 0, a + b ≤ 2, 0 < c < 10, 0 < y < 24, 0 < z < 17; SiₐSn_{b}C_{c}O_{y}N_{z}Xₙ, wobei Xₙ mindestens eines der Elemente aus F, Cl, Br, I, S, Se, Te, P, As, Sb, Bi, Ge, Pb und a > 0, b > 0, a + b > 0, a + b ≤ 2, 0 < c < 10, 0 < y < 24 und 0 < z < 17 ist; und SiₐSn_{b}O_{y}N_{z}Xₙ, wobei Xₙ mindestens eines der Elemente aus F, Cl, Br, I, S, Se, Te, P, As, Sb, Bi, Ge, Pb und a > 0, b > 0, a + b ≤ 2, 0 < y ≤ 4 und 0 < z ≤ 3 ist;
(iv) den Nitriden vom Typ SiₓN_{y} (insbesondere mit x = 3 und y = 4), SnₓN_{y} (insbesondere wobei x = 3 und y = 4), ZnₓN_{y} (insbesondere mit x = 3 und y = 4), Li₃₋ₓMₓN (wobei M = Co, Ni, Cu);
(v) den Oxiden SnO₂, Li₄Ti₅O₁₂, SnB_{0,6}P_{0,4}O_{2,9} und TiO₂.

10. Verfahren nach einem der Ansprüche 1 bis 9, **dadurch gekennzeichnet, dass** die Kathodenmaterialschicht b) aus einem Kathodenmaterial hergestellt wird, ausgewählt aus:
(i) den Oxiden LiMn₂O₄, LiCoO₂, LiNiO₂, LiMn₁,₅Ni_{0,5}O₄, LiMn_{1,5}Ni_{0,5-x}XₓO₄ (wobei X ausgewählt ist aus Al, Fe, Cr, Co, Rh, Nd, anderen seltenen Erden, und wobei 0 < x < 0,1), LiFeO₂, LiMn_{1/3}Ni_{1/3}Co_{1/3}O₄;
(ii) den Phosphaten LiFePO₄, LiMnPO₄, LiCoPO₄, LiNiPO₄, Li₃V₂ (PO₄)₃; den Phosphaten der Formel LiMM'PO₄, wobei M und M' (M ≠ M') ausgewählt sind aus Fe, Mn, Ni, Co, V;
(iii) allen den lithiumhaltigen Formen der folgenden Chalkogenide: V₂O₅, V₃O₈, TiS₂, den Titanoxysulfiden (TiO_{y}S_{z}), den Wolframoxysulfiden (WO_{y}S_{z}), CuS, CuS₂.

11. Verfahren nach einem der Ansprüche 1 bis 10, **dadurch gekennzeichnet, dass** die Elektrolytmaterialschicht c) aus Elektrolytmaterial hergestellt wird, ausgewählt aus:
- den Granaten der Formel Li_{d}A¹ₓA²_{y}(TO₄)_{z}, wobei
-- A¹ für ein Kation mit Oxidationsgrad +II, vorzugsweise Ca, Mg, Sr, Ba, Fe, Mn, Zn, Y, Gd steht; und wobei
-- A² für ein Kation mit Oxidationsgrad +III, vorzugsweise Al, Fe, Cr, Ga, Ti, La steht; und wobei
-- (TO₄) für ein Anion steht, wobei es sich bei T um ein Atom mit Oxidationsgrad +IV handelt, das sich in der Mitte eines von den Sauerstoffatomen gebildeten Tetraeders befindet, und wobei TO₄ vorteilhafterweise für das Silikat- oder Zirkonat-Anion steht, wobei alle oder ein Teil der Elemente T mit einem Oxidationsgrad von +IV durch Atome mit einem Oxidationsgrad von +III oder +V, wie etwa Al, Fe, As, V, Nb, In, Ta ersetzt sein können;
-- wobei: d im Bereich zwischen 2 und 10, vorzugsweise zwischen 3 und 9, und noch stärker bevorzugt zwischen 4 und 8 liegt; x 3 beträgt, aber im Bereich zwischen 2,6 und 3,4 (vorzugsweise zwischen 2,8 und 3,2) liegen kann; y 2 beträgt, aber im Bereich zwischen 1,7 und 2,3 (vorzugsweise zwischen 1,9 und 2,1) liegen kann, und z 3 beträgt, aber im Bereich zwischen 2,9 und 3,1 liegen kann;
- den Granaten, vorzugsweise ausgewählt aus: Li₇La₃Zr₂O₁₂; Li₆La₂BaTa₂O₁₂; Li_{5,5}La₃Nb_{1,75}In_{0,25}O₁₂; Li₅La₃M₂O₁₂, wobei M = Nb oder Ta oder eine Mischung der zwei Verbindungen ist; Li₇₋ₓBaₓLa₃₋ₓM₂O₁₂, wobei 0 ≤ x ≤ 1 und M = Nb oder Ta oder eine Mischung der zwei Verbindungen ist; Li₇₋ₓLa₃Zr₂₋ₓMₓO₁₂, wobei 0 ≤ x ≤ 2 und M = Al, Ga oder Ta oder eine Mischung von zwei oder drei dieser Verbindungen ist;
- den Lithiumphosphaten, vorzugsweise ausgewählt aus: Li₃PO₄; Li₃(Sc₂₋ₓMₓ)(PO₄)₃, wobei M = Al oder Y und 0 ≤ x ≤ 1; Li₁₊ₓMₓ(Sc)₂₋ₓ(PO₄)₃, wobei M = Al, Y, Ga oder eine Mischung der drei Verbindungen und 0 ≤ x ≤ 0,8 ist; Li₁₊ₓMₓ(Ga_{1-y}Sc_{y})₂₋ₓ(PO₄)₃, wobei 0 ≤ x ≤ 0,8; 0 ≤ y ≤ 1 und M = Al oder Y oder eine Mischung der zwei Verbindungen ist; Li₁₊ₓMₓ(Ga)₂₋ₓ(PO₄)₃, wobei M = Al, Y oder eine Mischung der zwei Verbindungen ist und 0 ≤ x ≤ 0,8; Li₁₊ₓAlₓTi₂₋ₓ(PO₄)₃, wobei 0 ≤ x ≤ 1, oder Li₁+ₓAlₓGe₂₋ₓ(PO₄)₃, wobei 0 ≤ x ≤ 1; oder Li_{1+x+z}Mₓ(Ge_{1-y}Ti_{y})₂₋ₓSi_{z}P_{3-z}O₁₂, wobei 0 ≤ x ≤ 0,8 und 0 ≤ y ≤ 1,0 & 0 ≤ z ≤ 0,6 und M = Al, Ga oder Y oder eine Mischung von zwei oder drei dieser Verbindungen ist; Li_{3+y}(Sc₂₋ₓMₓ)Q_{y}P_{3-y}O₁₂, wobei M = Al und/oder Y und Q = Si und/oder Se, 0 ≤ x ≤ 0,8 und 0 ≤ y ≤ 1; oder Li_{1+x+y}MₓSc₂₋ₓQ_{y}P_{3-y}O₁₂, wobei M = Al, Y, Ga oder eine Mischung der drei Verbindungen und Q = Si und/oder Se, 0 ≤ x ≤ 0,8 und 0 ≤ y ≤ 1 ist; oder Li_{1+x+y+z}Mₓ(Ga_{1-y}Sc_{y})₂₋ₓQ_{z}P_{3-z}O₁₂, wobei 0 ≤ x ≤ 0, 8; 0 ≤ y ≤ 1; 0 ≤ z ≤ 0,6, wobei M = Al oder Y oder eine Mischung der zwei Verbindungen und Q = Si und/oder Se ist; oder Li₁₊ₓNₓM₂₋ₓP₃O₁₂, wobei 0 ≤ x ≤ 1 und N = Cr und/oder V, M = Sc, Sn, Zr, Hf, Se oder Si, oder eine Mischung dieser Verbindungen ist;
- den schwefelhaltigen Lithiumverbindungen, vorzugsweise ausgewählt aus: LiₓAl_{z-y}Ga_{y}S_{w}(PO₄)_{c}, wobei 4 < w < 20, 3 < x < 10, 0 ≦ y < 1, 1 ≦ z < 4 und 0 < c < 20; LiₓAl_{z-y}Ga_{y}S_{w}(BO₃)_{c}, wobei 4 < w < 20, 3 < x < 10, 0 ≦ y < 1, 1 ≦ z < 4 und 0 < c < 20; LiₓAl_{z-y}Sc_{y}S_{w}(PO₄)_{c}, wobei 4 < w < 20, 3 < x < 10, 0 ≦ y < 1, 1 ≦ z < 4 und 0 < c < 20; LiₓAl_{z-y}Sc_{y}S_{w}(BO₃)_{c}, wobei 4 < w < 20, 3 < x < 10, 0 ≤ y < 1, 1 ≦ z < 4 und 0 < c < 20; LiₓGe_{z-y}Si_{y}S_{w}(PO₄) _{c}, wobei 4 < w < 20, 3 < x < 10, 0 ≦ y < 1, 1 ≦ z < 4, und 0 < c < 20; LiₓGe_{(z-y)}Si_{y}S_{w}(BO₃)_{c}, wobei 4 < w < 20, 3 < x < 10, 0 ≦ y < 1, 1 ≦ z < 4, und 0 < c < 20 ;
- den Lithiumboraten, vorzugsweise ausgewählt aus: Li₃(Sc₂₋ₓMₓ)(BO₃)₃, wobei M = Al oder Y und 0 ≤ x ≤ 1; Li₁₊ₓMₓ(Sc)₂₋ₓ(BO₃) ₃, wobei M = Al, Y, Ga oder eine Mischung der drei Verbindungen, und 0 ≤ x ≤ 0,8; 0 ≤ y ≤ 1 ist; Li₁₊ₓMₓ(Ga_{1-y}SC_{y})₂₋ₓ(BO₃)₃, wobei 0 ≤ x ≤ 0, 8; 0 ≤ y ≤ 1 und M = Al oder Y ist; Li₁₊ₓMₓ(Ga)₂₋ₓ(BO₃)₃, wobei M = Al, Y oder eine Mischung der zwei Verbindungen und 0 ≤ x ≤ 0,8; 0 ≤ y ≤ 1 ist; Li₃BO₃, Li₃BO₃-Li₂SO₄, Li₃BO₃-Li₂SiO₄, Li₃BO₃-Li₂SiO₄-Li₂SO₄;
- den Oxynitriden, vorzugsweise ausgewählt aus Li₃PO₄₋ₓN_{2x/3}, Li₄SiO₄₋ₓN_{2x/3}, Li₄GeO₄₋ₓN_{2x/3}, wobei 0 < x < 4, oder Li₃BO₃₋ₓN_{2x/3}, wobei 0 < x < 3; wobei die Materialien auf Basis von Lithium-Phosphor- oder Bor-Oxynitriden (LiPON und LIBON genannt) ebenfalls Silizium, Schwefel, Zirkonium, Aluminium oder eine Kombination aus Aluminium, Bor, Schwefel und/oder Silizium, und bei den Lithium-Phosphor Bor enthalten können;
- den Lithiumoxiden, vorzugsweise ausgewählt aus Li₇La₃Zr₂O₁₂ oder Li₅₊ₓLa₃(Zr_{x,}A₂₋ₓ)O₁₂, wobei A = Sc, Y, Al, Ga und 1,4 ≤ x ≤ 2 ist, oder Li_{0,35}La_{0,55}TiO₃;
- den Silikaten, vorzugsweise ausgewählt aus Li₂Si₂O₅, Li₂SiO₃, Li₂Si₂O₆, LiAlSiO₄, Li₄SiO₄, LiAlSi₂O₆;
- den Festkörperelektrolyten vom Typ Anti-Perowskit, ausgewählt aus: Li₃OA, wobei A ein Halogenid oder eine Mischung von Halogeniden, vorzugsweise mindestens eines der Elemente, ausgewählt aus F, Cl, Br, I, oder eine Mischung von zwei oder drei oder vier dieser Elemente ist; Li₍₃₋ₓ₎M_{x/2}OA, wobei 0 < x ≤ 3, M ein zweiwertiges Metall, vorzugsweise mindestens eines der Elemente, ausgewählt aus Mg, Ca, Ba, Sr, oder eine Mischung von zwei oder drei oder vier dieser Elemente, A ein Halogenid oder eine Mischung von Halogeniden, vorzugsweise mindestens eines der Elemente, ausgewählt aus F, Cl, Br, I, oder eine Mischung von zwei oder drei oder vier dieser Elemente ist; Li₍₃₋ₓ₎N_{x/3}OA, wobei 0 ≤ x ≤ 3, N ein dreiwertiges Metall, A ein Halogenid oder eine Mischung von Halogeniden, vorzugsweise mindestens eines der Elemente, ausgewählt aus F, Cl, Br, I, oder eine Mischung von zwei oder drei oder vier dieser Elemente ist; oder LiCOX_{z}Y_{(1-z)}, wobei X und Y Halogenide sind und 0 ≤ z ≤ 1.

12. Verfahren nach einem der Ansprüche 1 bis 11, **dadurch gekennzeichnet, dass** es weiter einen Schritt h) des Verkapselns der im Schritt g) erhaltenen Batterie mittels Abscheidens mindestens einer Verkapselungsschicht aus Keramik-, Glas- oder Glaskeramikmaterial umfasst.

13. Batterie, die mittels des Verfahrens nach einem der Ansprüche 1 bis 12 erhalten werden kann.

14. Batterie nach Anspruch 13, **dadurch gekennzeichnet, dass** der Stapel der Kathoden- und der Anodenschicht seitlich versetzt ist, und dadurch, dass sie vorzugsweise mindestens eine Verkapselungsschicht umfasst, bei der es sich um eine Schicht aus Keramikoxid, aus Glas oder aus Glaskeramik handeln kann, und dadurch, dass die Batterie vorzugsweise eine zweite, organische Verkapselungsschicht umfasst, die auf der ersten Verkapselungsschicht abgeschieden ist, wobei die zweite Verkapselungsschicht vorzugsweise aus Silikon oder Parylen ist.

15. Batterie nach Anspruch 13 oder 14, **dadurch gekennzeichnet, dass** die mindestens eine Verkapselungsschicht vier der sechs Seiten der Batterie vollständig und die zwei verbleibenden, unter den für den Anschluss der Batterie dienenden Metallisierungen liegenden Seiten mindestens teilweise überzieht.

## Claims

1. Method for manufacturing an all-solid battery made of thin films, comprising the following successive steps:
a) a layer comprising at least one anode material, here called "layer of anode material", is deposited on its conductive substrate, preferably selected from the group formed by a metal sheet, a metal strip, a metallised insulating sheet, a metallised insulating strip, a metallised insulating film, said conductive substrates, or their conductive elements, being able to act as an anode current collector;
b) a layer comprising at least one cathode material, here called "layer of cathode material", is deposited on its conductive substrate, preferably selected from the group formed by a metal sheet, a metal strip, a metallised insulating sheet, a metallised insulating strip, a metallised insulating film, said conductive substrates, or their conductive elements, being able to act as a cathode current collector, with it being understood that steps a) and b) can be inverted;
c) a layer comprising at least one solid electrolyte material (here, called "layer of electrolyte material") is deposited on at least one layer obtained in step a) and/or b);
d) a layer of a solution of an ionic conductive material, preferably, at least one lithium salt is deposited:
∘ either on the layer of anode material coated with a layer of solid electrolyte material and/or on the layer of cathode material coated or not coated with a layer of solid electrolyte material;
∘ or on the layer of cathode material coated with a layer of solid electrolyte material and/or on the layer of anode material coated or not coated with a layer of solid electrolyte material;
e) said layer of said solution of the ionic conductive material obtained in step d) is dried in order to obtain a layer of an ionic conductive material; the thickness of the layer of said ionic conductive material being less than 10µm, preferably less than 5µm, and even more preferably less than 2µm;
f) a layer of anode material obtained in step a), c) or e) is successively stacked, face on face, with a layer of cathode material obtained in step b), c) or e), with it being understood that the stack comprises at least one layer of solid electrolyte material obtained in step c) and at least one layer of an ionic conductive material obtained in step e);
g) a heat treatment and/or mechanical compression of the stack obtained in step f) is carried out in order to obtain an all-solid battery made of thin films,
wherein the thickness of each of the thin films present in the battery is less than 10µm and preferably less than 5µm.

2. Method according to claim 1, **characterised in that** after the step a) and/or b) of depositing the layer of anode and/or of cathode, and/or after the step c) of depositing the layer of electrolyte, a recrystallisation heat treatment of the layer of anode and/or of cathode and/or of electrolyte, respectively, is carried out, preferably at a temperature between 300°C and 1000°C, more preferably between 400°C and 800°C, and even more preferably between 500°C and 700°C.

3. Method according to claim 1 or 2, **characterised in that** the ionic conductive material used in step d) is chosen from:
a. the silicates, preferably chosen from Li₂Si₂O₅, Li₂SiO₃, Li₂Si₂O₆, LiAlSiO₄, Li₄SiO₄, LiAlSi₂O₆
b. the glass-ceramic compounds chosen from the mixtures Li₃BO₃-Li₂SO₄, Li₃BO₃-Li₂SiO₄, Li₃BO₃-Li₂SO₄Li₂SiO₄,
c. the ionic conductors of lithium ions chosen from: LiCI, LiBr, Lil, LiF, LiBH4, LiH, LiOH, LiBO₂, LiPO₃, LiNO₃, Li₃N, Li₂SO₄, LiVO₃, Li₂MoO₄, Li₂B₄O₇, or a mixture of these compounds,
d. the antiperovskite solid electrolytes chosen from: Li₃OA with A a halide or a mixture of halides, preferably at least one of the elements chosen from F, Cl, Br, I or a mixture of two or three or four of these elements; Li₍₃₋ₓ₎M_{x/2}OA with 0 < x ≤ 3, M a divalent metal, preferably at least one of the elements chosen from Mg, Ca, Ba, Sr or a mixture of two or three or four of these elements, A a halide or a mixture of halides, preferably at least one of the elements chosen from F, Cl, Br, I or a mixture of two or three or four of these elements; Li₍₃₋ₓ₎N_{x/3}OA with 0 ≤ x ≤ 3, N a trivalent metal, A a halide or a mixture of halides, preferably at least one of the elements chosen from F, Cl, Br, I or a mixture of two or three or four of these elements; or LiCOX_{z}Y_{(1-z)}, with X and Y halides and 0 ≤ z ≤ 1,
said materials that are ionic conductors of lithium ions being preferably used in amorphous form.

4. Method according to claim 3, **characterised in that** the materials that are ionic conductors of lithium ions comprise at least one additional compound, chosen preferably, from the salts of halides, and advantageously chosen from the salts KCI, KBr, KI, KF, NaCl, NaBr, Nal and NaF.

5. Method according to any one of claims 1 to 4, **characterised in that** the layers of anode, of cathode and of solid electrolyte are deposited among at least one of the following techniques:
(i) physical vapour deposition (PVD), and more particularly via evaporation under vacuum, via laser ablation, via an ion beam, via cathode sputtering;
(ii) chemical vapour deposition (CVD), and more particularly plasma-enhanced (PECVD), laser-assisted (LACVD), or aerosol-assisted (AA-CVD);
(iii) atomic layer deposition (ALD);
(iv) electrospraying;
(v) electrophoresis;
(vi) aerosol deposition;
(vii) sol-gel;
(viii) coating, more particularly dip coating, spin coating, or the Langmuir-Blodgett method.

6. Method according to any one of claims 1 to 5, **characterised in that** the layers of anode and/or cathode material further comprise electronic conductive materials, and in particular of graphite, and/or nanoparticles of materials that conduct lithium ions, of the type of those used to create the films of electrolyte, or polymer materials comprising ionic groups.

7. Method according to any one of claims 1 to 6, **characterised in that** the layers of anode and/or of cathode and/or of electrolyte are created via deposition of nanoparticles of anode, cathode or electrolyte material, respectively, out of at least one of the following techniques: electrospraying, electrophoresis, aerosol deposition, coating, and are preferably all deposited via electrophoresis; and wherein the size of said nanoparticles of electrolyte material is preferably less than 100nm, and even more preferably less than 30nm.

8. Method according to any one of claims 1 to 7, **characterised in that** the heat treatment is carried out at a temperature between 50°C and 500°C, preferably at a temperature of less than 350°C, and even more preferably between 100°C and 200°C and/or **in that** the mechanical compression of the layers to be assembled is carried out at a pressure between 10 and 100MPa, preferably between 20 and 50MPa.

9. Method according to any one of claims 1 to 8, **characterised in that** the layer of anode material a) is made from a material chosen from:
(i) the oxynitrides of tin (having the typical formula SnOₓN_{y});
(ii) lithium iron phosphate (having the typical formula LiFePO₄);
(iii) the mixed oxynitrides of silicon and tin (having the typical formula SiₐSn_{b}O_{y}N_{z} with a>0, b>0, a+b≤2, 0<y≤4, 0<z≤3) (also called SiTON), and in particular SiSn_{0.87}O_{1.2}N_{1.72}; as well as the oxynitride-carbides having the typical formula SiₐSn_{b}C_{c}O_{y}N_{z} with a>0, b>0, a+b≤2, 0<c<10, 0<y<24, 0<z<17; SiₐSn_{b}C_{c}O_{y}N_{z}Xₙ with Xₙ at least one of the elements out of F, Cl, Br, I, S, Se, Te, P, As, Sb, Bi, Ge, Pb and a>0, b>0, a+b>0, a+b≤2, 0<c<10, 0<y<24 and 0<z<17; and SiₐSn_{b}O_{y}N_{z}Xₙ with Xₙ at least one of the elements out of F, Cl, Br, I, S, Se, Te, P, As, Sb, Bi, Ge, Pb and a>0, b>0, a+b≤2, 0<y≤4 and 0<z≤3;
(iv) the nitrides of the type SiₓN_{y} (in particular with x=3 and y=4), SnₓN_{y} (in particular with x=3 and y=4), ZnₓN_{y} (in particular with x=3 and y=4), Li₃₋ₓMₓN (with M = Co, Ni, Cu);
(v) the oxides SnO₂, Li₄Ti₅O₁₂, SnB_{0.6}P_{0.4}O_{2.9} and TiO₂.

10. Method according to any one of claims 1 to 9, **characterised in that** the layer of cathode material b) is made from a cathode material chosen from:
(i) the oxides LiMn₂O₄, LiCoO₂, LiNiO₂, LiMn_{1.5}Ni_{0.5}O₄, LiMn_{1.5}Ni_{0.5-x}XₓO₄ (where x is selected from Al, Fe, Cr, Co, Rh, Nd, other rare earths, and where 0 < x < 0.1), LiFeO₂, LiMn_{1/3}Ni_{1/3}Co_{1/3}O₄;
(ii) the phosphates LiFePO₄, LiMnPO₄, LiCoPO₄, LiNiPO₄, Li₃V₂(PO₄)₃; the phosphates having the formula LiMM'PO₄, with M and M' (M ≠ M') selected from Fe, Mn, Ni, Co, V;
(iii) all of the lithiated forms of the following chalcogenides: V₂O₅, V₃O₈, TiS₂, the oxysulfides of titanium (TiO_{y}S_{z}), the oxysulfides of tungsten (WO_{y}S_{z}), CuS, CuS₂.

11. Method according to any one of claims 1 to 10, **characterised in that** the layer of electrolyte material c) is made from an electrolyte material chosen from:
∘ the garnets having the formula Li_{d} A¹ₓ A²_{y}(TO₄)_{z} where
▪ A¹ is a cation having the oxidation state +II, preferably Ca, Mg, Sr, Ba, Fe, Mn, Zn, Y, Gd; and where
▪ A² is a cation having the oxidation state +III, preferably Al, Fe, Cr, Ga, Ti, La; and where
▪ (TO₄) is an anion in which T is an atom having the oxidation state +IV, located at the centre of a tetrahedron formed by the atoms of oxygen, and wherein TO₄ advantageously represents the anion silicate or zirconate, wherein all or a portion of the elements T having an oxidation state of +IV can be replaced by atoms having an oxidation state of +III or +V, such as Al, Fe, As, V, Nb, In, Ta;
▪ wherein: d is between 2 and 10, preferably between 3 and 9, and more preferably between 4 and 8; x is 3 but can be between 2.6 and 3.4 (preferably between 2.8 and 3.2); y is 2 but can be between 1.7 and 2.3 (preferably between 1.9 and 2.1) and z is 3 but can be between 2.9 and 3.1;
∘ the garnets, preferably chosen from: Li₇La₃Zr₂O₁₂; Li₆La₂BaTa₂O₁₂; Li_{5.5}La₃Nb_{1.75}In_{0.25}O₁₂; Li₅La₃M₂O₁₂ with M = Nb or Ta or a mixture of the two compounds; Li₇₋ₓBaₓLa₃₋ₓM₂O₁₂ with 0≤x≤1 and M = Nb or Ta or a mixture of the two compounds; Li₇₋ₓLa₃Zr₂₋ₓMₓO₁₂ with 0≤x≤2 and M = Al, Ga or Ta or a mixture of two or three of these compounds;
∘ the lithiated phosphates, preferably chosen from: Li₃PO₄; Li₃(Sc₂₋ₓMₓ)(PO₄)₃ with M=AI or Y and 0 ≤ x ≤ 1; Li₁₊ₓMₓ(Sc)₂₋ₓ(PO₄)₃ with M = Al, Y, Ga or a mixture of the three compounds and 0 ≤ x ≤ 0.8; Li₁₊ₓMₓ(Ga_{1-y}Sc_{y})₂₋ₓ(PO₄)₃ with 0 ≤ x ≤ 0.8; 0 ≤ y ≤ 1 and M= Al or Y or a mixture of the two compounds; Li₁₊ₓMₓ(Ga)₂₋ₓ(PO₄)₃ with M = Al, Y or a mixture of the two compounds and 0 ≤ x ≤ 0.8; Li₁₊ₓAlₓTi₂₋ₓ(PO₄)₃ with 0 ≤ x ≤ 1, or Li₁₊ₓAlₓGe₂₋ₓ(PO₄)₃ with 0 ≤ x ≤ 1; or Li_{1+x+z}Mₓ(Ge_{1-y}Ti_{y})₂₋ₓSi_{z}P_{3-z}O₁₂ with 0≤x≤0.8 and 0≤y≤1.0 & 0≤z≤0.6 and M= Al, Ga or Y or a mixture of two or three of these compounds; Li_{3+y}(Sc₂₋ₓMₓ)Q_{y}P_{3-y}O₁₂, with M = Al and/or Y and Q = Si and/or Se, 0 ≤ x ≤ 0.8 and 0 ≤ y ≤ 1; or Li_{1+x+y}MₓSc₂₋ₓQ_{y}P_{3-y}O₁₂, with M = Al, Y, Ga or a mixture of the three compounds and Q = Si and/or Se, 0 ≤ x ≤ 0.8 and 0 ≤ y ≤ 1; or Li_{1+x+y+z}Mₓ(Ga_{1-y}Sc_{y})₂₋ₓQ_{z}P_{3-z}O₁₂ with 0 ≤ x ≤ 0.8; 0≤y≤1; 0≤z≤ 0.6 with M = Al or Y or a mixture of the two compounds and Q= Si and/or Se; or Li₁₊ₓNₓM₂₋ₓP₃O₁₂, with 0 ≤ x ≤ 1 and N= Cr and/or V, M = Sc, Sn, Zr, Hf, Se or Si, or a mixture of these compounds;
∘ the lithiated sulphur compounds, preferably chosen from: LiₓAl_{z-y}Ga_{y}S_{w}(PO₄)_{c} with 4<w<20, 3<x<10, 0≦y<1, 1≦z<4 and 0<c<20; LiₓAl_{z-y}Ga_{y}S_{w}(BO₃)_{c} with 4<w<20, 3<x<10, 0≦y<1, 1≦z<4 and 0<c<20; LiₓAl_{z-y}Sc_{y}S_{w}(PO₄)_{c} with 4<w<20, 3<x<10, 0≦y<1, 1≦z<4 and 0<c<20; LiₓAl_{z-y}Sc_{y}S_{w}(BO₃)_{c} with 4<w<20, 3<x<10, 0≦y<1, 1≦z<4 and 0<c<20; LiₓGe_{z-y}Si_{y}S_{w}(PO₄)_{c} with 4<w<20, 3<x<10, 0≦y<1, 1≦z<4 and 0<c<20; LiₓGe_{(z-y)}Si_{y}S_{w}(BO₃)_{c} with 4<w<20, 3<x<10, 0≦y<1, 1≦z<4 and 0<c<20;
∘ the lithiated borates, preferably chosen from: Li₃(Sc₂₋ₓMₓ)(BO₃)₃ with M=AI or Y and 0 ≤ x ≤ 1; Li₁₊ₓMₓ(Sc)₂₋ₓ(BO₃)₃ with M = Al, Y, Ga or a mixture of the three compounds and 0 ≤ x ≤ 0.8; 0 ≤ y ≤ 1; Li₁₊ₓMₓ(Ga_{1-y}Sc_{y})₂₋ₓ(BO₃)₃ with 0 ≤ x ≤ 0.8; 0 ≤ y ≤ 1 and M= Al or Y; Li₁₊ₓMₓ(Ga)₂₋ₓ(BO₃)₃ with M = Al, Y or a mixture of the two compounds and 0 ≤ x ≤ 0.8; 0 ≤ y ≤ 1; Li₃BO₃, Li₃BO₃-Li₂SO₄, Li₃BO₃-Li₂SiO₄, Li₃BO₃-Li₂SiO₄-Li₂SO₄;
∘ the oxynitrides, preferably chosen from Li₃PO₄₋ₓN_{2x/3}, Li₄SiO₄₋ₓN_{2x/3}, Li₄GeO₄₋ₓN_{2x/3} with 0 < x < 4 or Li₃BO₃₋ₓN_{2x/3} with 0 < x < 3; the materials containing lithium oxynitrides of phosphorus or of boron (called LiPON and LIBON) that can also contain silicon, sulphur, zirconium, aluminium, or a combination of aluminium, boron, sulphur and/or silicon, and boron for the of lithium of phosphorus;
∘ the lithiated oxides, preferably chosen from Li₇La₃Zr₂O₁₂ or Li₅₊ₓLa₃(Zrₓ,A₂₋ₓ)O₁₂ with A=Sc, Y, Al, Ga and 1.4 ≤ x ≤ 2 or Li_{0.35}La_{0.55}TiO₃;
∘ the silicates, preferably chosen from Li₂Si₂O₅, Li₂SiO₃, Li₂Si₂O₆, LiAlSiO₄, Li₄SiO₄, LiAlSi₂O₆;
∘ the antiperovskite solid electrolytes chosen from: Li₃OA with A a halide or a mixture of halides, preferably at least one of the elements chosen from F, Cl, Br, I or a mixture of two or three or four of these elements; Li₍₃₋ₓ₎M_{x/2}OA with 0 < x ≤ 3, M a divalent metal, preferably at least one of the elements chosen from Mg, Ca, Ba, Sr or a mixture of two or three or four of these elements, A a halide or a mixture of halides, preferably at least one of the elements chosen from F, Cl, Br, I or a mixture of two or three or four of these elements; Li₍₃₋ₓ₎N_{x/3}OA with 0 ≤ x ≤ 3, N a trivalent metal, A a halide or a mixture of halides, preferably at least one of the elements chosen from F, Cl, Br, I or a mixture of two or three or four of these elements; or LiCOX_{z}Y_{(1-z)}, with X and Y halides and 0 ≤ z ≤ 1.

12. Method according to any one of claims 1 to 11, **characterised in that** it further comprises a step h) of encapsulation of the battery obtained in step g) via deposition of at least one encapsulation layer of ceramic, glass or glass-ceramic material.

13. Battery suitable for being obtained by the method according to any one of claims 1 to 12.

14. Battery according to claim 13, **characterised in that** the stack of the layers of cathode and of anode is offset laterally, and **in that** it comprises preferably at least one encapsulation layer, which may be a layer made of ceramic oxide, glass or glass-ceramic, and **in that** said battery comprises preferably a second organic encapsulation layer deposited on said first encapsulation layer, said second encapsulation layer preferably being made of silicone or parylene.

15. Battery according to claim 13 or 14, **characterised in that** said at least one encapsulation layer totally coats four of the six faces of said battery and partially coats the two remaining faces, located under the metallisations used for the connections of the battery.
